# EUROPEAN PATENT APPLICATION

(11) **EP 4 624 195 A2**
(43) Date of publication of application: **01.10.2025**
(21) Application number: 25196413.6
(22) Date of filing: 14.12.2020
(51) Int. Cl.: B60B 33/02

(54) **ANTI-SHIMMY DEVICE ADAPTED FOR A WHEEL OF A CHILD CARRIER**

(30) Priority: 16.12.2019 CN 201922278002 U; 24.12.2019 CN 201911360910; 30.12.2019 CN 201911392410; 13.01.2020 CN 202010034387
(62) Divisional of application: 20833747.7
(71) Applicant: Wonderland Switzerland AG, 6312 Steinhausen (CH)
(72) Inventor: WU, HaiTao, Dongguan, Guangdong, 523648 (CN); ZHU, Wanquan, Dongguan, Guangdong, 523648 (CN); ZHENG, Leilei, Dongguan, Guangdong, 523648 (CN); WANG, Er-Xue, Dongguan, Guangdong, 523648 (CN); ZENG, Hai-Bo, Dongguan, Guangdong, 523648 (CN)
(74) Representative: Lucke, Andreas

(57) **Abstract**

An anti-shimmy device is adapted for a wheel of a child carrier. The anti-shimmy device includes a connecting base, a wheel base, a spindle component and a restraining mechanism. The connecting base is connectable to a frame of the child carrier. The wheel base is connectable to the wheel of the child carrier. The spindle component is fixedly connected to the connecting base and the wheel base and rotatably connectable to the wheel base. The restraining mechanism is configured to restrain a shimmy movement of the wheel base relative to the connecting base. The restraining mechanism comprises a rotating sleeve and a damping plate, the rotating sleeve is fixedly disposed on the wheel base, the spindle component passes through the rotating sleeve and is rotatable relative to the rotating sleeve, and the damping plate is disposed on the spindle component and pushes the rotating sleeve along an axial direction of the spindle component.

## Description

### Field of the Invention

The present invention relates to an anti-shimmy device adapted for a wheel of a child carrier according to the pre-characterizing clause of claim 1.

### Background of the Invention

Child carriers, such as child strollers, can reduce burdens of caregivers who carry their children outside, and therefore, are popular and widely used. The child carrier usually uses wheels to improve their mobility. However, the conventional child carrier may bounce and shake due to rocking and/or swaying of the wheels when the child carrier goes over a bumpy road, which negatively impacts on riding safety and comfort of the child carrier. Therefore, there is a need to provide a solution to solve the aforementioned problem.

EP 3 248 579 A1 discloses a caster wheel assembly for a wheelchair, comprising a caster housing, a central body having a radially outwards extending flange, which central body is configured to be received by the caster housing, a spindle shaft configured to be rotationally locked relative to the central body, a first bearing having an inner bearing race configured to be rotationally locked relative to the spindle shaft, a friction member; configured to be rotationally locked relative to the caster housing, and a resilient member configured to be arranged between the flange and the friction member, and configured to provide a force between the flange and the friction member to thereby create friction torque between the caster housing and the spindle shaft.

GB 2431868 A discloses a device for limiting swivel of a wheel of a stroller includes a fork mounted to the wheel, a swivel-limiting unit, and a quick release unit. The swivel-limiting unit includes a connecting seat adapted to be disposed fixedly on a frame unit of the stroller, a limiting seat connected fixedly to the fork, and a control member disposed on the connecting seat and operable to extend into the limiting seat so as to prevent rotation of the fork relative to the connecting seat.

US 1,409,150 A discloses casters intended to be employed on furniture adapted to compensate for uneven floors or any slight inaccuracies in the pedestals or legs of the furniture. A spindle of the caster is supported by a spring, such that the caster will automatically adjust itself to such uneven conditions.

US 1,727,976 A discloses casters intended to be employed on furniture, wherein swiveling of the caster wheel is yieldably resisted using resilient frictional resistance means fixedly secured on a caster frame to impose a constant resistance to swivelling of said frame through the weight of the supported object.

US 2002/175018 A1 discloses a dolly wheel steering system. When a signal from the controller requests utilization of steering control, the coupling device applies a restraining force to the dolly wheel spindle to limit free rotation of the dolly wheel. When the rotation of the dolly wheel spindle is thus restrained, the steering control system can effectuate direct steering control of the dolly wheels to provide precise directional control.

US 2011/162166 A1 discloses caster alignment mechanism having a first component operably connected to a leg of a mobile device and a second component operably connected to a caster of the mobile device.

US 2018/104987 A1 discloses a work vehicle that includes a vehicle frame, a rotating connection unit provided in the vehicle frame, and a caster assembly connected to the rotating connection unit. The rotating connection unit includes a housing sleeve, a swivel post, a first bearing and a second bearing supporting the swivel post to be rotatable within the housing sleeve, and a rotation stopper disposed between the swivel post and the housing sleeve to stop rotation of the swivel post.

US 2019/160868 A1 discloses a driven caster wheel assembly with a wheel, an axle, a drive assembly, a drive shaft, and a bevel gear. The wheel may be mounted to the axle for rotation about a drive axis and steering about a substantially vertical steering axis. The drive shaft may extend along the steering axis from a first end to a second end, with the first end being connected to the axle and the second end being connected to the drive assembly such that the drive assembly controls rotation of the drive shaft about the steering axis. The bevel gear may connect the first end to the axle such that rotation of the drive shaft about the steering axis controls rotation of the wheel about the drive axis to drive the driven caster wheel assembly in a substantially horizontal direction.

DE 20 2017 104 458 U1 discloses a wheel connecting device including a mounting seat, a shaft, a sleeve member and a retaining member. The mounting seat defines an accommodating space and includes a surrounding wall that has an inner surrounding surface surrounding the accommodating space. The shaft has a first mounting segment that is inserted into the accommodating space, and a second mounting segment that is disposed under and connected to the first mounting segment. The sleeve member is sleeved on the connecting portion of the first mounting segment of the shaft. The retaining member extends helically around a neck portion of the first mounting segment of the shaft, and is in contact with the neck portion and the surrounding wall.

### Summary of the Invention

This is mind, the present invention aims at providing an anti-shimmy device adapted for a wheel of a child carrier.

This is achieved by an anti-shimmy device adapted for a wheel of a child carrier according to claim 1. The dependent claims pertain to corresponding further developments and improvements.

As will be seen more clearly from the detail description following below, the claimed anti-shimmy device is adapted for a wheel of a child carrier. The anti-shimmy device includes a connecting base, a wheel base, a spindle component and a restraining mechanism. The connecting base is connected to a frame of the child carrier. The wheel base is connected to the wheel of the child carrier. The spindle component is fixedly connected to one of the connecting base and the wheel base and rotatably connected to another one of the connecting base and the wheel base. The restraining mechanism is configured to restrain a shimmy movement of the wheel base relative to the connecting base.

According to an embodiment of the present invention, the restraining mechanism includes a damping component fixedly connected to the another one of the connecting base and the wheel base. A through hole is disposed on the damping component, and the spindle component passes through the through hole and tightly fits with the damping component.

According to an embodiment of the present invention, a recess is disposed on the spindle component, and a protrusion protrudes from the damping component tightly fits with the recess.

According to an embodiment of the present invention, the recess is a trapezoid recess, and the protrusion is a trapezoid protrusion.

According to an embodiment of the present invention, the restraining mechanism further includes at least one fixing component configured to fixedly connect the damping component to the another one of the connecting base and the wheel base.

According to an embodiment of the present invention, the restraining mechanism further includes a bearing disposed on the another one of the connecting base and the wheel base, and the spindle component is rotatably connected to the another one of the connecting base and the wheel base by the bearing.

According to an embodiment of the present invention, the restraining mechanism includes a pushing component configured to push the spindle component along an axial direction of the spindle component.

According to an embodiment of the present invention, the pushing component is movably disposed on the another one of the connecting base and the wheel base, and the restraining mechanism further includes a resilient component connected to the pushing component for driving the pushing component to push the spindle component.

According to an embodiment of the present invention, the restraining mechanism further includes an engaging component. A long hole is disposed on the engaging component. The spindle component passes through the long hole, and the engaging component is movable relative to the spindle component along a lateral direction of the spindle component by a cooperation of the long hole and the spindle component to push the spindle component along the lateral direction of the spindle component.

According to an embodiment of the present invention, a recess is disposed on the spindle component, and a protrusion protrudes from the engaging component engages with the recess along the lateral direction of the spindle component when the engaging component pushes the spindle component along the lateral direction of the spindle component.

According to an embodiment of the present invention, the engaging component is movably disposed on the another one of the connecting base and the wheel base, and the restraining mechanism further includes a recovering component disposed between the engaging component and the another one of the connecting base and the wheel base for driving the engaging component to push the spindle component along the lateral direction of the spindle component.

According to an embodiment of the present invention, the restraining mechanism further includes at least one positioning column fixedly disposed on at least one of the pushing component and the another one of the connecting base and the wheel base, and the resilient component is sleeved on the at least one positioning column.

According to an embodiment of the present invention, the pushing component includes two protruding portions fixedly disposed on the one of the connecting base and the wheel base, and an end of the spindle component is clamped by the two protruding portions.

According to an embodiment of the present invention, the restraining mechanism further includes at least two rotators rotatably engaged with each other.

According to an embodiment of the present invention, the at least two rotators includes a first gear and a second gear. The first gear is fixedly disposed on the another one of the connecting base and the wheel base and sleeved on the spindle component, and the second gear is rotatably disposed on the one of the connecting base and the wheel base.

According to an embodiment of the present invention, the restraining mechanism further includes a fixing portion fixedly disposed on the another one of the connecting base and the wheel base and sleeved on the spindle component.

According to an embodiment of the present invention, the first gear and the fixing portion are integrally formed with each other.

According to an embodiment of the present invention, a root diameter of the first gear is larger than a root diameter of the second gear.

According to an embodiment of the present invention, the restraining mechanism includes a damping block disposed on a side of the spindle component and movable relative to the spindle component along a lateral direction of the spindle component to push the spindle component along the lateral direction of the spindle component.

According to an embodiment of the present invention, a recess is disposed on the spindle component, and a protrusion protrudes from the damping block and engages with the recess along the lateral direction of the spindle component when the damping block pushes the spindle component along the lateral direction of the spindle component.

According to an embodiment of the present invention, the damping block is movably disposed on the another one of the connecting base and the wheel base, and the restraining mechanism further includes a recovering component disposed between the damping block and the another one of the connecting base and the wheel base for driving the damping block to push the spindle component along the lateral direction of the spindle component.

According to an embodiment of the present invention, the restraining mechanism further includes at least one positioning column fixedly disposed on at least one of the damping block and the another one of the connecting base and the wheel base, and the recovering component is sleeved on the at least one positioning column.

According to an embodiment of the present invention, the restraining mechanism further includes a mounting component fixedly disposed on the another one of the connecting base and the wheel base, and the spindle component is rotatably connected to the another one of the connecting base and the wheel base by the mounting component.

According to an embodiment of the present invention, the anti-shimmy device further includes a buffering component disposed between the wheel and the wheel base, and the buffering component and the spindle component are arranged in parallel.

According to an embodiment of the present invention, the restraining mechanism includes a rotating sleeve and a damping plate. The rotating sleeve is fixedly disposed on the another one of the connecting base and the wheel base. The spindle component passes through the rotating sleeve and is rotatable relative to the rotating sleeve, and the damping plate is disposed on the spindle component and pushes the rotating sleeve along an axial direction of the spindle component.

According to an embodiment of the present invention, the restraining mechanism includes a damping plate, and the damping plate is disposed on the spindle component and pushes the rotating sleeve along an axial direction of the spindle component.

According to an embodiment of the present invention, the restraining mechanism further includes a rotating sleeve. The rotating sleeve is fixedly disposed on the another one of the connecting base and the wheel base. The spindle component includes a restraining portion and an extending portion. The rotating sleeve includes a penetrating hole for insertion of the extending portion. The restraining portion is for restraining an insertion length of the extending portion into the penetrating hole. The damping plate is located between the restraining portion and the rotating sleeve, and the extending portion passes through the penetrating hole to be connected to the connecting base.

According to an embodiment of the present invention, the restraining mechanism includes a sheathing component, and the sheathing component is fixedly disposed on the another one of the connecting base and the wheel base and sleeved on the spindle component.

According to an embodiment of the present invention, at least one notch is disposed on a wall of the sheathing component, and an inner diameter of the sheathing component is less than an outer diameter of the spindle component.

According to an embodiment of the present invention, the restraining mechanism includes a shaft sleeve and a resilient component. The shaft sleeve is movably disposed on the another one of the connecting base and the wheel base and sleeved on the spindle component, and the resilient component is disposed between the shaft sleeve and the another one of the connecting base and the wheel base for driving the shaft sleeve to push the spindle component along a lateral direction of the spindle component.

According to an embodiment of the present invention, the restraining mechanism further includes at least one bearing fixedly disposed on the another one of the connecting base and the wheel base.

According to an embodiment of the present invention, the restraining mechanism further includes an abutting component disposed between the connecting base and the wheel base.

According to an embodiment of the present invention, the restraining mechanism includes a fixing base fixedly connected to the one of the connecting base and the wheel base and sleeved on the spindle component. An accommodating hole is disposed on the another one of the connecting base and the wheel base, and the fixing base tightly fits with the accommodating hole.

According to an embodiment of the present invention, the fixing base includes a fixing main body and at least one resilient abutting portion, and the at least one resilient abutting portion abuts against a wall of the accommodating hole and is resiliently deformed when the fixing base tightly fits with the accommodating hole.

In summary, the restraining mechanism of the anti-shimmy device of the present invention can restrain the shimmy movement of the wheel base connected to the wheel relative to the connecting base connected to the frame. Therefore, the present invention can effectively prevent the child carrier from bouncing and shaking when the child carrier goes over a bumpy road, which improves riding safety and comfort of the child carrier.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a schematic diagram of a child carrier according to a first embodiment of the present invention,
FIG. 2 is a partial diagram of the child carrier according to the first embodiment of the present invention,
FIG. 3 is an exploded diagram of an anti-shimmy device according to the first embodiment of the present invention,
FIG. 4 is a sectional diagram of the anti-shimmy device according to the first embodiment of the present invention,
FIG. 5 is a diagram of a damping component according to the first embodiment of the present invention,
FIG. 6 is a schematic diagram of a child carrier according to a second embodiment of the present invention,
FIG. 7 is a partial diagram of the child carrier according to the second embodiment of the present invention,
FIG. 8 is a sectional diagram of an anti-shimmy device according to the second embodiment of the present invention,
FIG. 9 is a partial diagram of a child carrier according to a third embodiment of the present invention,
FIG. 10 is a partial sectional diagram of the child carrier according to the third embodiment of the present invention,
FIG. 11 to FIG. 14 are different partial diagrams of the child carrier according to the third embodiment of the present invention,
FIG. 15 is another partial sectional diagram of the child carrier according to the third embodiment of the present invention,
FIG. 16 is a diagram of a fixing portion according to the third embodiment of the present invention,
FIG. 17 is a diagram of a wheel base body according to the third embodiment of the present invention,
FIG. 18 is a partial diagram of a child carrier according to a fourth embodiment of the present invention,
FIG. 19 is a partial enlarged diagram of the child carrier according to the fourth embodiment of the present invention,
FIG. 20 is a partial sectional diagram of an anti-shimmy device according to the fourth embodiment of the present invention,
FIG. 21 is an exploded diagram of the anti-shimmy device according to the fourth embodiment of the present invention,
FIG. 22 is a diagram of a damping block according to the fourth embodiment of the present invention,
FIG. 23 is a partial diagram of a child carrier according to a fifth embodiment of the present invention,
FIG. 24 is an enlarged diagram of an A portion of the child carrier shown in FIG. 23 according to the fifth embodiment of the present invention,
FIG. 25 is an exploded diagram of an anti-shimmy device according to the fifth embodiment of the present invention,
FIG. 26 is partial sectional diagram of the child carrier according to the fifth embodiment of the present invention,
FIG. 27 is an enlarged diagram of a B portion of the child carrier shown in FIG. 26 according to the fifth embodiment of the present invention,
FIG. 28 is a partial diagram of a child carrier according to a sixth embodiment of the present invention,
FIG. 29 is an enlarged diagram of a C portion of the child carrier according to the sixth embodiment of the present invention,
FIG. 30 is a diagram of a sheathing component according to the sixth embodiment of the present invention,
FIG. 31 is a partial diagram of a child carrier according to a seventh embodiment of the present invention,
FIG. 32 is a partial enlarged diagram of the child carrier according to the seventh embodiment of the present invention,
FIG. 33 is another partial enlarged diagram of the child carrier according to the seventh embodiment of the present invention,
FIG. 34 is a partial exploded diagram of the child carrier according to the seventh embodiment of the present invention,
FIG. 35 is a partial sectional diagram of the child carrier according to the seventh embodiment of the present invention.
FIG. 36 is a schematic diagram of a child carrier according to an eighth embodiment of the present invention,
FIG. 37 is a partial diagram of the child carrier according to the eighth embodiment of the present invention,
FIG. 38 is a partial exploded diagram of the child carrier according to the eighth embodiment of the present invention,
FIG. 39 is a partial internal structural diagram of the child carrier according to the eighth embodiment of the present invention, and
FIG. 40 is another partial internal structural diagram of the child carrier according to the eighth embodiment of the present invention.

### Detailed Description

In the following detailed description of the preferred embodiments, reference is made to the accompanying drawings which form a part hereof, and in which is shown by way of illustration specific embodiments in which the invention may be practiced. In this regard, directional terminology, such as "top", "bottom", "front", "back", etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive. Also, the term "connect" is intended to mean either an indirect or direct mechanical connection. Thus, if a first device is connected to a second device, that connection may be through a direct mechanical connection, or through an indirect mechanical connection via other devices and connections.

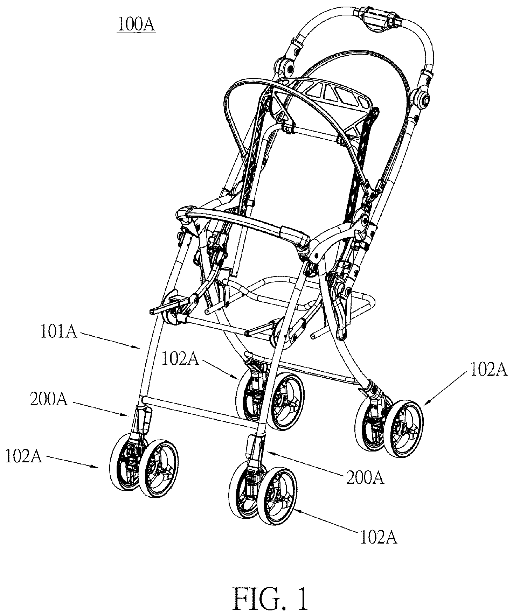

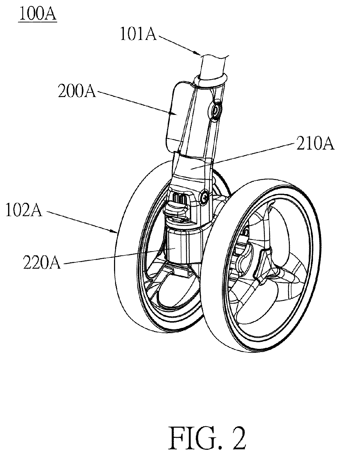

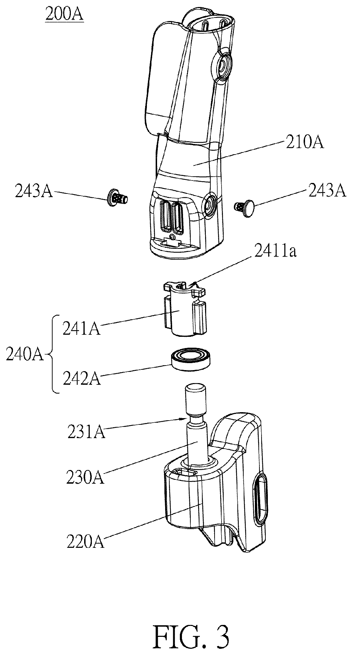

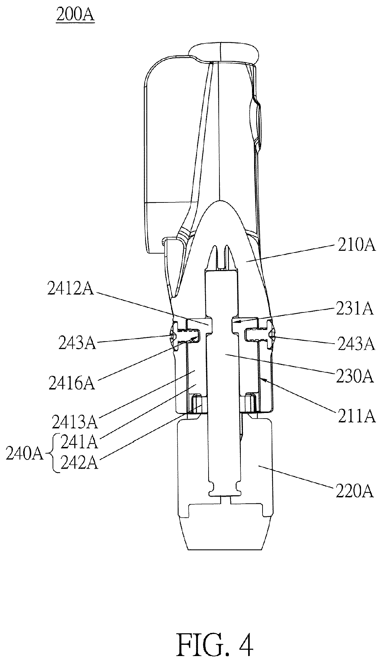

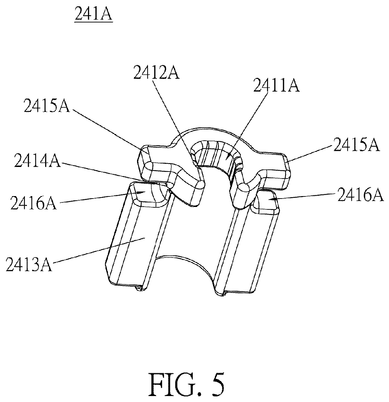

Please refer to FIG. 1 to FIG. 5. FIG. 1 is a schematic diagram of a child carrier 100A according to a first embodiment of the present invention. FIG. 2 is a partial diagram of the child carrier 100A according to the first embodiment of the present invention. FIG. 3 is an exploded diagram of an anti-shimmy device 200A according to the first embodiment of the present invention. FIG. 4 is a sectional diagram of the anti-shimmy device 200A according to the first embodiment of the present invention. FIG. 5 is a diagram of a damping component 241A according to the first embodiment of the present invention. As shown in FIG. 1 to FIG. 5, the child carrier 100A can be a child stroller. However, the present invention is not limited thereto. For example, in another embodiment, the child carrier can be a child crib, a child basket, or a child bassinet. The child carrier 100A includes a frame 101A, four wheels 102A, and two anti-shimmy devices 200A. A front foot of the frame 101A is connected to two of the four wheels 102A, and a rear foot of the frame 101A is connected to the other two of the four wheels 102A. Each of the two anti-shimmy devices 200A is disposed between the front foot of the frame 101A and the corresponding wheel 102A. However, the numbers and the configurations of the wheel and the anti-shimmy device are not limited to this embodiment. It depends on practical demands. For example, in another embodiment, the child carrier can include only one anti-shimmy device disposed on the rear foot of the frame and the corresponding wheel.

As shown in FIG. 2 to FIG. 4, each of the two anti-shimmy devices 200A includes a connecting base 210A, a wheel base 220A, a spindle component 230A and a restraining mechanism 240A. The connecting base 210A is connected to the frame 101A. The wheel base 220A is connected to the corresponding wheel 102A. The wheel base 220A is rotatably connected to the connecting base 210A by the spindle component 230A. The restraining mechanism 240A is for restraining a shimmy movement of the wheel base 220A relative to the connecting base 210A.

Specifically, a lower end portion of the spindle component 230A is fixedly connected to the wheel base 220A, and an upper end portion of the spindle component 230A is rotatably connected to the connecting base 210A. The restraining mechanism 240A includes the damping component 241A and a bearing 242A. The bearing 242A is disposed on the connecting base 210A, so that the spindle component 230A is rotatably connected to the connecting base 210A by the bearing 242A. An installation hole 211A is disposed inside the connecting base 210A. The damping component 241A is fixed inside the installation hole 211A. A through hole 2411A is disposed on the damping component 241A. The spindle component 230A passes through the through hole 2411A and tightly fits with the damping component 241A. The damping component 241A can restrain a movement of the spindle component 230A for restraining the shimmy movement of the wheel base 220A relative to the connecting base 210A.

More specifically, a recess 231A is disposed on the spindle component 230A. A protrusion 2412A protrudes from damping component 241A. The recess 231A is located on an outer wall of the spindle component 230A. The protrusion 2412A is located on an inner wall of the through hole 2411A on the damping component 241A. When the spindle component 230A passes through the through hole 2411A, the protrusion 2412A tightly fits with the recess 231A to restrain a rotation of the spindle component 230A along a horizontal direction and a vibration of the spindle component 230A along a vertical direction for restraining a shimmy movement of the wheel base 220A relative to the connecting base 210A along the horizontal direction and a shimmy movement of the wheel base 220A relative to the connecting base 210A along the vertical direction.

Furthermore, in this embodiment, the recess 231A can be a trapezoid recess, and the protrusion 2412A can be a trapezoid protrusion, which enables a tight fitting of the protrusion 2412A and the recess 231A to restrain the movements of the spindle component 230A along the horizontal direction and the vertical direction more effectively.

Besides, the restraining mechanism 240A further includes two fixing components 243A configured to fixedly connect the damping component 241A to the connecting base 210A. In this embodiment, the fixing component 243A can be a screw.

Specifically, as shown in FIG. 4 and FIG. 5, the damping component 241A includes a main body 2413A and a neck portion 2414A disposed on an end of the main body 2413A. Two protruding shoulders 2415A protrude from an outer side of the neck portion 2414A. A connecting portion 2416A, which is a concave structure, is disposed between each of the two protruding shoulders 2415A and the main body 2413A. The two fixing components 243A passes through the connecting base 210A to be respectively inserted into the two connecting portions 2416A to fixedly connect the damping component 241A to the connecting base 210A for preventing the damping component 241A from being driven to move by the spindle component 230A, so as to ensure a structural stability.

However, the present invention is not limited this embodiment. The numbers of the fixing component, the protruding shoulder and the connecting portion depend on practical demands. For example, in another embodiment, the restraining mechanism can include only one fixing component, and there can be only one protruding shoulder and one connecting portion on the damping component.

In this embodiment, the anti-shimmy device 200A utilizes the tight fitting of the protrusion 2412A protruding from the damping component 241A and the recess 231A on the spindle component 230A to restrain the movements of the spindle component 230A along the horizontal direction and the vertical direction for restraining the shimmy movements of the wheel base 220A relative to the connecting base 210A along the horizontal direction and the vertical direction. Therefore, the child carrier 100A is prevented from bouncing or shaking when going over a bumpy road, which improves riding safety and comfort of the child carrier 100A.

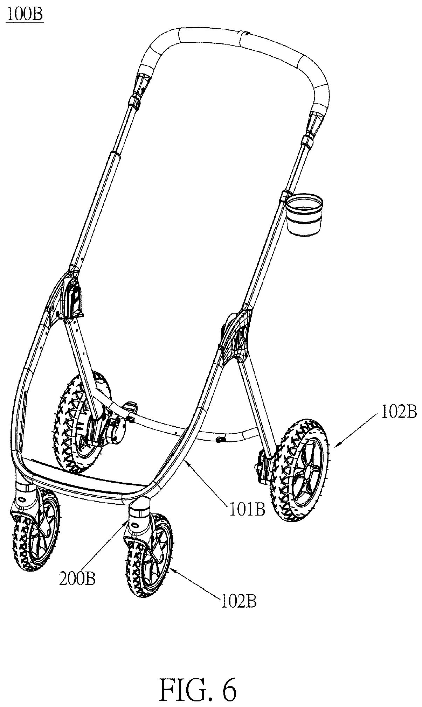

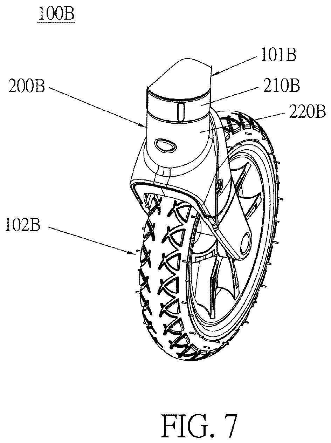

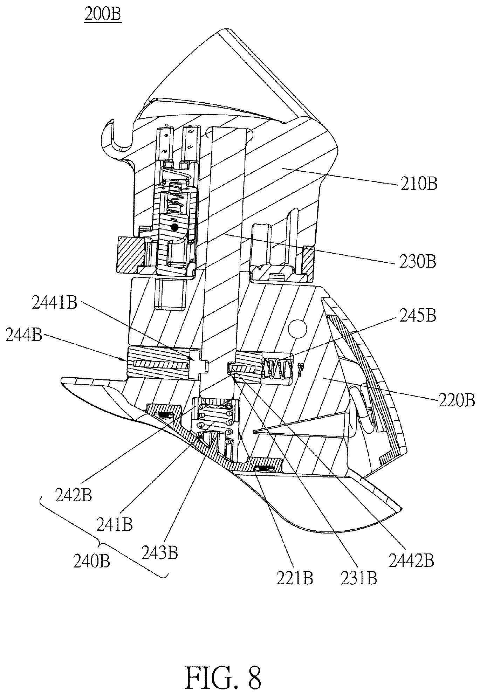

Please refer to FIG. 6 to FIG. 8. FIG. 6 is a schematic diagram of a child carrier 100B according to a second embodiment of the present invention. FIG. 7 is a partial diagram of the child carrier 100B according to the second embodiment of the present invention. FIG. 8 is a sectional diagram of an anti-shimmy device 200B according to the second embodiment of the present invention. As shown in FIG. 6 to FIG. 8, the child carrier 100B includes a frame 101B, four wheels 102B and two anti-shimmy devices 200B. A front foot of the frame 101B is connected to two of the four wheels 102B, and a rear foot of the frame 101B is connected to the other two of the four wheels 102B. Each of the two anti-shimmy devices 200B is disposed between the front foot of the frame 101B and the corresponding wheel 102B and includes a connecting base 210B, a wheel base 220B, a spindle component 230B and a restraining mechanism 240B. The connecting base 210B is connected to the frame 101B. The wheel base 220B is connected to the corresponding wheel 102B. A lower end portion of the spindle component 230B is rotatably connected to the wheel base 220B, and an upper end portion of the spindle component 230B is fixedly connected to the connecting base 210B. A positioning hole 221B is disposed inside the wheel base 220B. The restraining mechanism 240B includes a resilient component 241B and a pushing component 242B. The pushing component 242B is movably disposed inside the positioning mechanism 240B and adjacent to the lower end portion of the spindle component 230B. The resilient component 241B is connected to the pushing component 242B for providing the pushing component 242B with a resilient force along an axial direction of the spindle component 230B to drive the pushing component 242B to push the spindle component 230B along the axial direction of the spindle component 230B, so as to restrain a vibration of the spindle component 230B along the vertical direction for restraining a shimmy movement of the wheel base 220B relative to the connecting base 210B along the vertical direction.

Furthermore, in this embodiment, the resilient component 241B can be a compression spring. A side of the pushing component 242B adjacent to the spindle component 230B can be a flat structure, and another side of the pushing component 242B adjacent to the resilient component 241B can be a socket structure for sheathing an upper end portion of the resilient component 241B for firmly positioning the upper end portion of the resilient component 241B. The restraining mechanism 240B can further include a positioning column 243B fixedly disposed on the wheel base 220B. A lower end portion of the resilient component 241B is sleeved on the positioning column 243B, so that the lower end portion of the resilient component 241B is firmly positioned. The aforementioned configuration prevents the resilient component 241B from deviating, which ensures a structural stability.

However, the present invention is not limited to this embodiment. Any structure which can position the resilient component is included within the scope of the present invention. For example, in another embodiment, a position of the socket structure and a position of the positioning column can be exchanged with each other, i.e., the socket structure can be disposed on the wheel base, and the positioning column can be disposed on a side of the pushing component adjacent to the resilient component. Alternatively, in another embodiment, the restraining mechanism can include two positioning columns or two socket structures disposed on the wheel base and the pushing component. Alternatively, in another embodiment, the positioning column and the socket structure can be omitted.

Besides, as shown in FIG. 8, the restraining mechanism 240B further includes an engaging component 244B. A long hole 2441B is disposed on the engaging component 244B. The spindle component 230B passes through the long hole 2441B. The engaging component 244B is movable relative to the spindle component 230B along a lateral direction of the spindle component 230B by a cooperation of the long hole 2441B and the spindle component 230B for pushing the spindle component 230B along the lateral direction of the spindle component 230B, so as to restrain a rotation of the spindle component 230B along the horizontal direction for restraining a shimmy movement of the wheel base 220B relative to the connecting base 210B along the horizontal direction.

In this embodiment, a recess 231B is disposed on the spindle component 230B. A protrusion 2442B protrudes from the engaging component 244B. When the engaging component 244B pushes the spindle component 230B along the lateral direction of the spindle component 230B, the protrusion 2442B engages with the recess 231B along the lateral direction of the spindle component 230B. The aforementioned configuration can not only restrain the rotation of the spindle component 230B along the horizontal direction but also achieve a quick detachment of the wheel base 220B and the connecting base 210B. In other words, a user can operate the engaging component 244B to drive the protrusion 2442B to disengage from the recess 231B for allowing the wheel base 220B and the connecting base 210B to be separated from each other.

Moreover, the restraining mechanism 240B further includes a recovering component 245B disposed between the wheel base 220B and the engaging component 244B for driving the engaging component 244B to push the spindle component 230B along the lateral direction of the spindle component 230B, i.e., the engaging component 244B is biased to push the spindle component 230B along the lateral direction by the recovering component 245B.

In this embodiment, the anti-shimmy device 200B respectively utilizes the pushing component 242B and the engaging component 244B to restrain the vibration of the spindle component 230B along the vertical direction and the rotation of the spindle component 230B along the horizontal direction for restraining the shimmy movements of the wheel base 220B relative to the connecting base 210B along the vertical direction and the horizontal direction. Therefore, the child carrier 100B is prevented from bouncing or shaking when going over a bumpy road, which improves riding safety and comfort of the child carrier 100B.

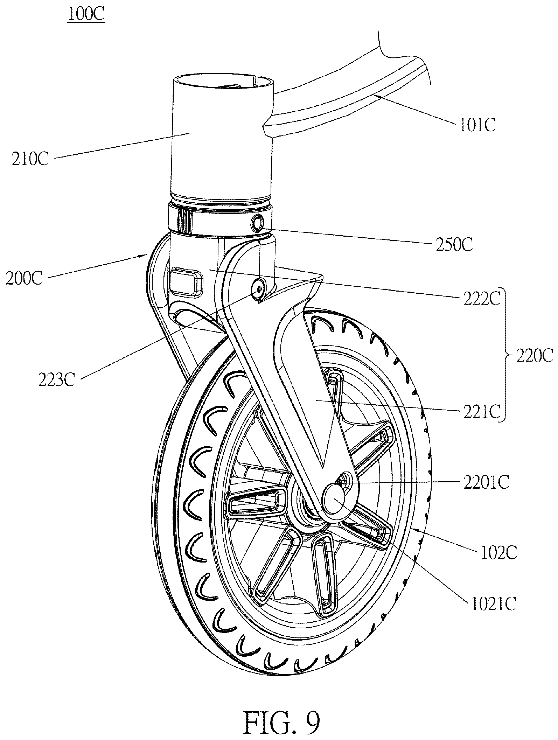

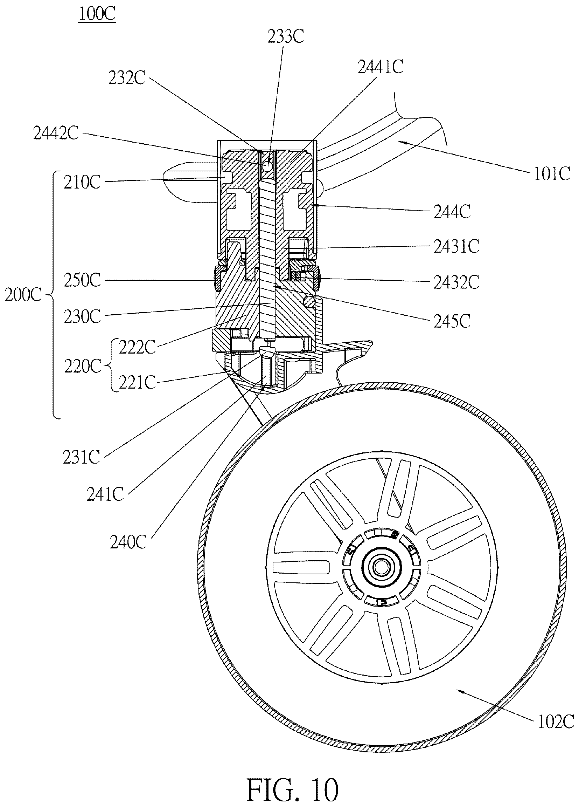

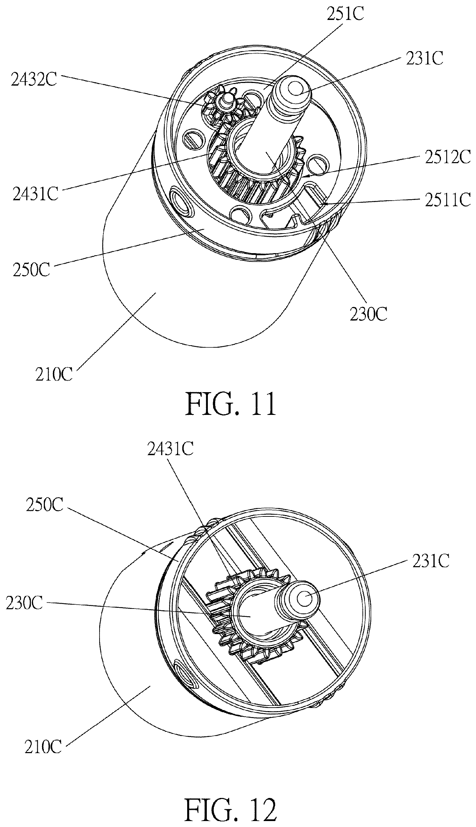

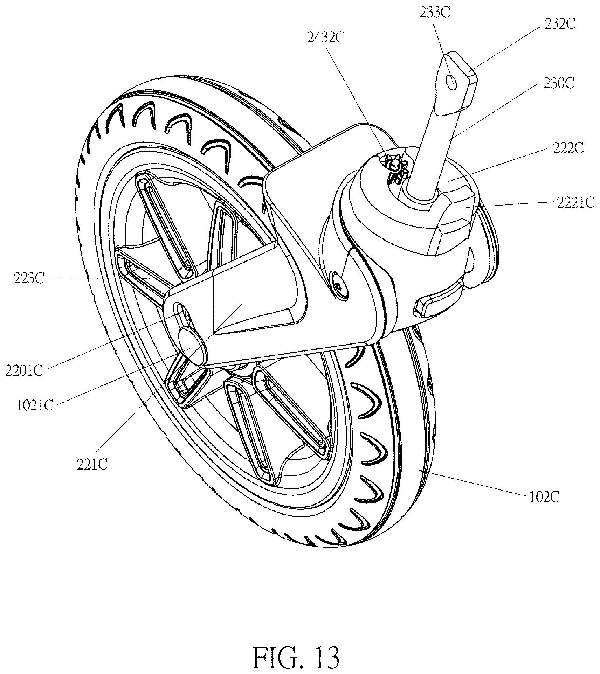

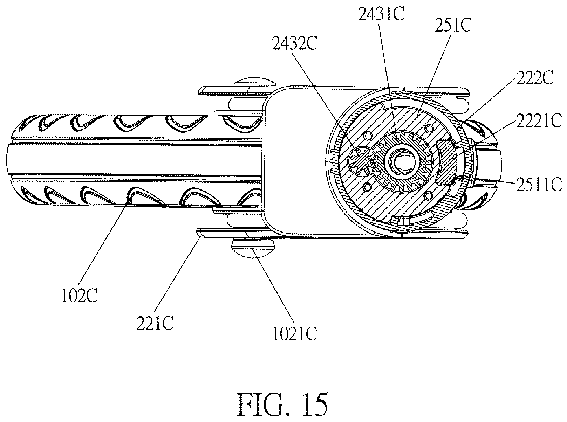

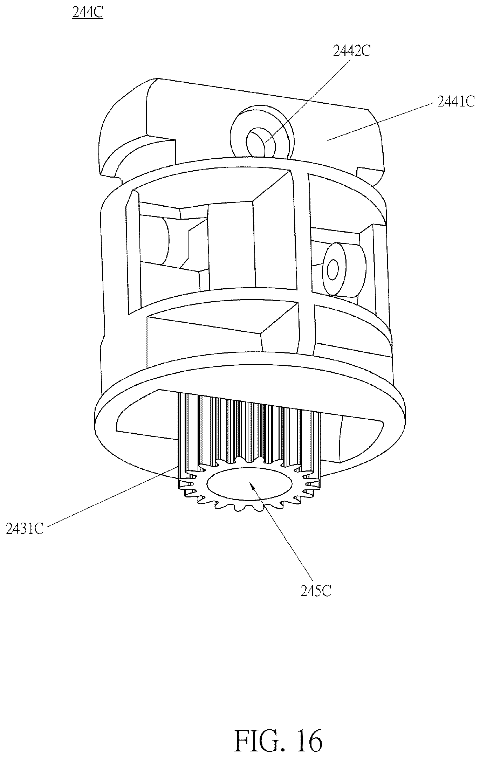

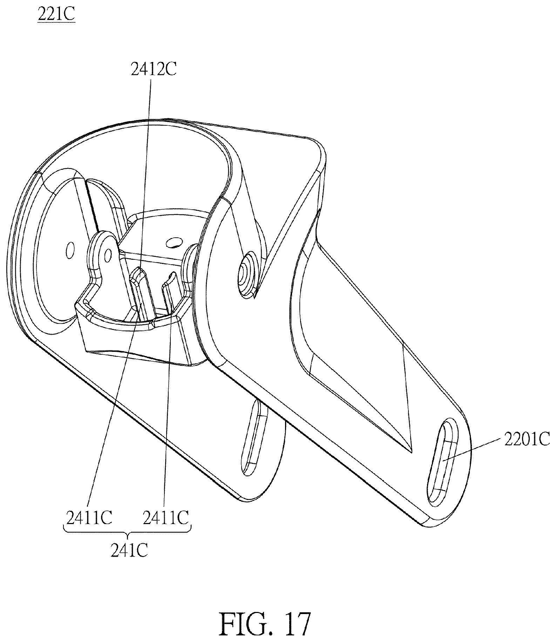

Please refer to FIG. 9 to FIG. 17. FIG. 9 is a partial diagram of a child carrier 100C according to a third embodiment of the present invention. FIG. 10 is a partial sectional diagram of the child carrier 100C according to the third embodiment of the present invention. FIG. 11 to FIG. 14 are different partial diagrams of the child carrier 100C according to the third embodiment of the present invention. FIG. 15 is another partial sectional diagram of the child carrier 100C according to the third embodiment of the present invention. FIG. 16 is a diagram of a fixing portion 244C according to the third embodiment of the present invention. FIG. 17 is a diagram of a wheel base body 221C according to the third embodiment of the present invention. As shown in FIG. 9 to FIG. 17, the child carrier 100C includes a frame 101C, at least one wheel 102C and at least one anti-shimmy device 200C. The anti-shimmy device 200C is disposed between the frame 101C and the corresponding wheel 102C and includes a connecting base 210C, a wheel base 220C, a spindle component 230C and a restraining mechanism 240C. The connecting base 210C is connected to the frame 101C. The wheel base 220C is connected to the corresponding wheel 102C. A lower end portion of the spindle component 230C is rotatably connected to the wheel base 220C, and an upper end portion of the spindle component 230C is fixedly connected to the connecting base 210C.

As shown in FIG. 9, FIG. 13, FIG. 14 and FIG. 17, a long hole 2201C is disposed on a lower end portion of the wheel base 220C and arranged in a slanted manner. A wheel shaft 1021C of the wheel 102C passes through the long hole 2201C and is slidable within the long hole 2201C. When the wheel 102C is forced by a vertical external force, the wheel 102C can move relative to the wheel base 220C by a cooperation of the wheel shaft 1021C and the long hole 2201C for preventing the wheel 102C from driving the wheel base 220C to shimmy relative to the connecting base 210C along the vertical direction.

As shown in FIG. 9, FIG. 10, FIG. 13, FIG. 14 and FIG. 17, the wheel base 220C includes the wheel base body 221C and a positioning base 222C. An accommodating recess is on an upper end portion of the wheel base body 221C for accommodating the positioning base 222C. The positioning base 222C is detachably connected to the wheel base body 221C. In this embodiment, the wheel base body 221C and the positioning base 222C can be connected to each other by two fastening components 223C, wherein the fastening component 223C can be a screw. The spindle component 230C fixedly passes through the positioning base 222C. The restraining mechanism 240C includes a pushing component 241C. The pushing component 241C includes two positioning protrusions 2411C fixedly disposed on the wheel base body 221C. The lower end portion of the spindle component 230C protrudes from the positioning base 222C and clamped by the two positioning protrusions 2411C. The two positioning protrusions 2411C can push the spindle component 230C along an axial direction of the spindle component 230C to restrain a vibration of the spindle component 230C along the vertical direction for restraining a shimmy movement of the wheel base 220C relative to the connecting base 210C along the vertical direction.

In this embodiment, the two positioning protrusions 2411C and the wheel base body 221 can be integrally formed with each other. A guiding surface 2412C can be disposed on each of the two positioning protrusions 2411C. A mating head 231C, which is a hemispherical structure, can be disposed on the lower end portion of the spindle component 230C. The mating head 231C can guided by the two guiding surfaces 2412C to be inserted between the two positioning protrusions 2411C in a tight fitting manner, which ensures a structural stability.

Furthermore, as shown in FIG. 11 to FIG. 16, the restraining mechanism 240C further includes a first gear 2431C and a second gear 2432C. The first gear 2431C is sleeved on the spindle component 230C. The second gear 2432C is rotatably disposed on the positioning base 222C and rotatably engages with the first gear 2431C. When the wheel 102C is forced by a horizontal external force, a rotation of the spindle component 230C can be restrained by a rotating engagement of the first gear 2431C and the second gear 2432C to restrain a shimmy movement of the wheel base 220C relative to the connecting base 210C along the horizontal direction.

In this embodiment, a root diameter of the first gear 2431C can be greater than a root diameter of the second gear 2432C, so as to achieve a better effect of restraining the rotation of the spindle component 230C along the horizontal direction. However, the present invention is not limited to this embodiment. In another embodiment, the root diameter of the first gear can be equal to or less than the root diameter of the second gear.

Besides, as shown in FIG. 10 to FIG. 12 and FIG. 16, the restraining mechanism 240C further includes the fixing portion 244C fixedly disposed on the connecting base 210C and sleeved on the spindle component 230C. The first gear 2431C is disposed on a lower end portion of the fixing portion 244C. In this embodiment, the fixing portion 244C and the first gear 2431C can be integrally formed with each other. An accommodating chamber 245C is disposed inside the fixing portion 244C for insertion of the spindle component 230C. An upper end portion 244C is fixed on the connecting base 210C. The fixing portion 244C is for providing support for internal structures of the connecting base 210C to improve the structural stability. In this embodiment, an installation portion 2441C, which is a flat structure, can be disposed on the upper end portion of the fixing portion 244C, and a first installation hole 2442C can be disposed on the installation portion 2441C. Furthermore, a flat portion 232C can be disposed on the upper end portion of the spindle component 230C, and a second installation hole 233C can be disposed on the flat portion 232C and located at a position corresponding to the first installation hole 2442C. The aforementioned configuration enables the spindle component 230C and the fixing portion 244C to be fixed on the connecting base 210C by a positioning pin passing through the first installation hole 2442C and the second installation hole 233C.

Understandably, in order to achieve rotation of the second gear 2432C, an inserting hole can be disposed on the positioning base 222C for insertion of a shaft of the second gear 2432C. Furthermore, in another embodiment, a pivoting shaft can protrude from the positioning base for allowing the second gear to be sleeved thereon.

However, the present invention is not limited to this embodiment. The restraining mechanism also can utilize at least two other rotators to restrain the rotation of the spindle component along the horizontal direction instead of the gears. For example, in another embodiment, the restraining mechanism can include a cam sleeved on the spindle component and a plurality of rotating discs rotatably engaging with the cam, and the cam can drive the plurality of rotating discs to rotate to restrain the rotation of the spindle component along the horizontal direction when the wheel is forced by a horizontal external force.

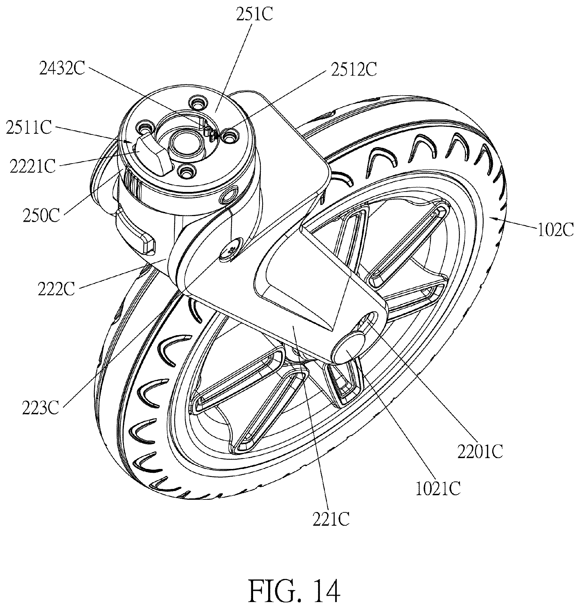

As shown in FIG. 11 and FIG. 14, the anti-shimmy device 200C further includes a supporting base 250C disposed between the connecting base 210C and the positioning base 222C. An engaging protrusion 2221C protrudes from the positioning base 222C. A protecting cover 251C is disposed on the supporting base 250C. The second gear 2432C is located between the positioning base 222C and the protecting cover 251C. An engaging slot 2511C is disposed on the protecting cover 251C for engaging with the engaging protrusion 2221C, and an opening 2512C is disposed on the protecting cover 251C for allowing the spindle component 230C and the first gear 2431C to pass therethrough.

In this embodiment, the anti-shimmy device 200C respectively utilizes the pushing component 241C and the rotating engagement of the first gear 2431C and the second gear 2432C to restrain the vibration of the spindle component 230C along the vertical direction and the rotation of the spindle component 230C along the horizontal direction, so as to restrain the shimmy movements of the wheel base 220C relative to the connecting base 210C along the vertical direction and the horizontal direction. Besides, the anti-shimmy device 200C further utilizes the cooperation of the wheel shaft 1021C and the long hole 2201C to prevent the wheel 102C from driving the wheel base 220C to shimmy relative to the connecting base 210C along the vertical direction. Therefore, the child carrier 100C is prevented from bouncing or shaking when going over a bumpy road, which improves riding safety and comfort of the child carrier 100C.

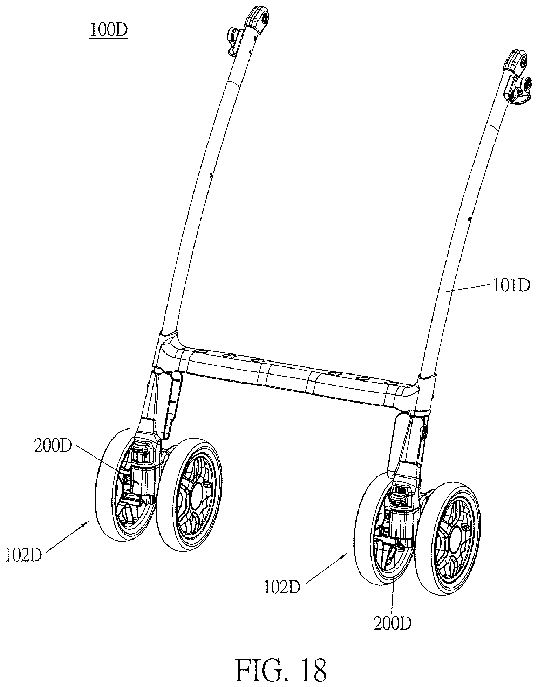

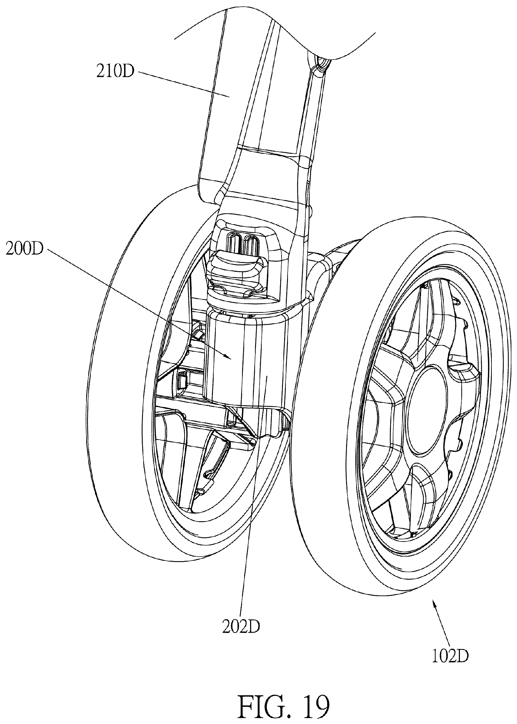

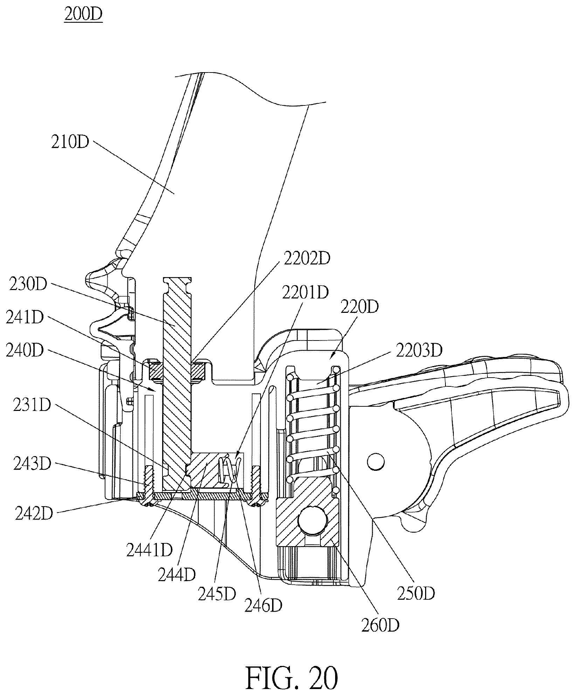

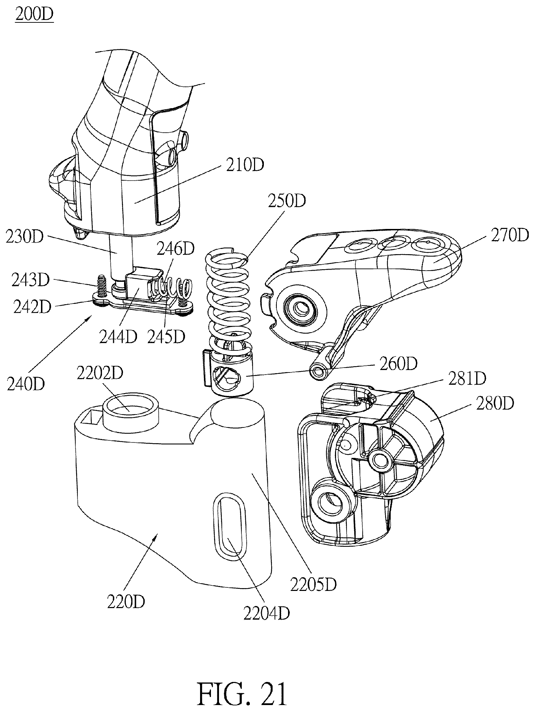

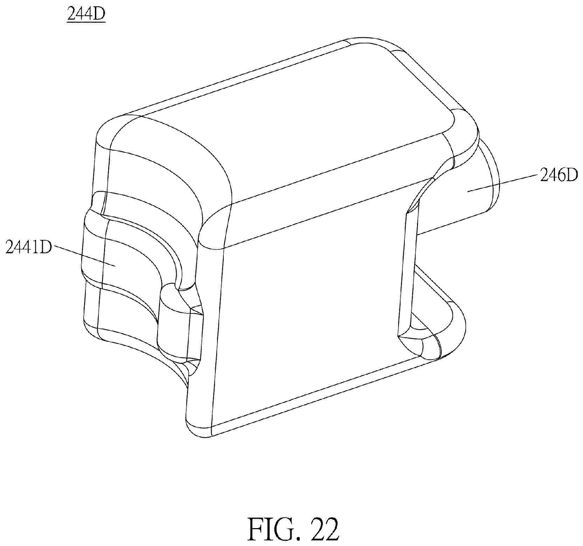

Please refer to FIG. 18 to FIG. 22. FIG. 18 is a partial diagram of a child carrier 100D according to a fourth embodiment of the present invention. FIG. 19 is a partial enlarged diagram of the child carrier 100D according to the fourth embodiment of the present invention. FIG. 20 is a partial sectional diagram of an anti-shimmy device 200D according to the fourth embodiment of the present invention. FIG. 21 is an exploded diagram of the anti-shimmy device 200D according to the fourth embodiment of the present invention. FIG. 22 is a diagram of a damping block 244D according to the fourth embodiment of the present invention. As shown in FIG. 18 to FIG. 22, the child carrier 100D includes a frame 101D, at least one wheel 102D and at least one anti-shimmy device 200D. The anti-shimmy device 200D is disposed between the frame 101D and the corresponding wheel 102D. The anti-shimmy device 200D includes a connecting base 210D, a wheel base 220D, a spindle component 230D and a restraining mechanism 240D. The connecting base 210D is connected to the frame 101D. The wheel base 220D is connected to the corresponding wheel 102D. A lower end portion of the spindle component 230D is rotatably connected to the wheel base 220D. An upper end portion of the spindle component 230D is fixedly connected to the connecting base 210D. The restraining mechanism 240D is disposed between the spindle component 230D and the wheel base 220D for restraining a shimmy movement of the wheel base 220D relative to the connecting base 210D.

Specifically, as shown in FIG. 20 to FIG. 22, the wheel base 220D includes a first accommodating chamber 2201D and a through hole 2202D. The first accommodating chamber 2201D is for accommodating the spindle component 230D and the restraining mechanism 240D. The through hole 2202D is communicated with the first accommodating chamber 2201D and for allowing the spindle component 230D to pass therethrough. The spindle component 230D passes through the through hole 2202D and is disposed between the wheel base 220D and the connecting base 210D along the vertical direction. The restraining mechanism 240D includes a bearing 241D and a mounting component 242D. The bearing 241D is disposed inside the first accommodating chamber 2201D and located beneath the through hole 2202D. The spindle component 230D passes through the bearing 241D for achieving a rotatable connection of the spindle component 230D and the wheel base 220D. The mounting component 242D is located adjacent to the lower end portion of the spindle component 230D and for positioning the spindle component 230D inside the first accommodating chamber 2201D. The mounting component 242D is fixed inside the first accommodating chamber 2201D by at least one fastening component 243D.

Besides, the restraining mechanism 240D further includes the damping block 244D and a recovering component 245D. The damping block 244D is disposed inside the first accommodating chamber 2201D and located beside the lower end portion of the spindle component 230D. The damping block 244D is movable relative to the spindle component 230D along a lateral direction of the spindle component 230D for pushing the spindle component 230D along the lateral direction of the spindle component 230D, so as to restrain a rotation of the spindle component 230D along the horizontal direction for restraining a shimmy movement of the wheel base 220D relative to the connecting base 210D along the horizontal direction. The recovering component 245D is disposed inside the first accommodating chamber 2201D and located between the wheel base 220D and the damping block 244D for driving the damping block 244D to push the spindle component 230D along the lateral direction of the spindle component 230D.

Specifically, the damping block 244D can be made of rubber or plastic materials. The recovering component can be a spring. The restraining mechanism 240D can further include a positioning column 246D fixedly disposed on the damping block 244D. The recovering component 245D is sleeved on the positioning column 246D. However, the present invention is not limited to this embodiment. It depends on practical demands. For example, the positioning column can be disposed on the wheel base. Alternatively, in another embodiment, the restraining mechanism can include two positioning columns fixedly disposed on the damping block and the wheel base respectively. Alternatively, in another embodiment, the positioning column can be omitted.

In this embodiment, a recess 231D is disposed on the spindle component 230D. A protrusion 2441D protrudes from the damping block 244D. The protrusion 2441D engages with the recess 231D along the lateral direction of the spindle component 230D when the damping block 244D pushes the spindle component 230D along the lateral direction of the spindle component 230D. Specifically, the recess 231D can be a circular recess. A surface of the damping block 244D adjacent to the spindle component 230D can be an arc-shaped surface. The protrusion 2441D can be disposed on the arc-shaped surface.

Moreover, the anti-shimmy device 200D further includes a buffering component 250D installed between the wheel 102D and the wheel base 220D. The buffering component 250D and the spindle component 230 are arranged in parallel. Specifically, the wheel base 220D further includes a second accommodating chamber 2203D and two slots 2204D communicated with the second accommodating chamber 2203D and for allowing a wheel shaft of the wheel 102D to pass therethrough. The anti-shimmy device 200D further includes a supporting block 260D. The buffering component 250D and the supporting block 260D are disposed inside the second accommodating chamber 2203D. The supporting block 260D is located on the wheel shaft of the wheel 102D. The buffering component 250D is disposed between the supporting block 260D and a top wall of the second accommodating chamber 2203D for preventing the wheel 102D from driving the wheel base 220D to move along the vertical direction to restrain a shimmy movement of the wheel base 220D relative to the connecting base 210D along the vertical direction. However, the present invention is not limited to this embodiment. For example, in another embodiment, a supporting portion can extend from a bottom portion of the second accommodating chamber, and the supporting portion can be abutted against an end of the buffering component and connected to the wheel shaft of the wheel.

Besides, the anti-shimmy device 200D further includes a first connecting component 270D and a second connecting component 280D. The first connecting component 270D is pivotally connected to the second connecting component 280D. The second connecting component 280D is pivotally connected to the wheel base 220D by the wheel shaft of the wheel 102D. Specifically, the second connecting component 280D includes an accommodating chamber 281D for accommodating a periphery 2205D of the second accommodating chamber 2203D of the wheel base 220D.

In this embodiment, the anti-shimmy device 200D utilizes the damping block 244D to restrain the rotation of the spindle component 230D along the horizontal direction for restraining the shimmy movement of the wheel base 220D relative to the connecting base 210D along the horizontal direction. Moreover, the anti-shimmy device 200D further utilizes the buffering component 250D to prevent the wheel 102D from driving the wheel base 220D to shimmy relative to the connecting base 210D along the vertical direction. Therefore, the child carrier 100D is prevented from bouncing or shaking when going over a bumpy road, which improves riding safety and comfort of the child carrier 100D.

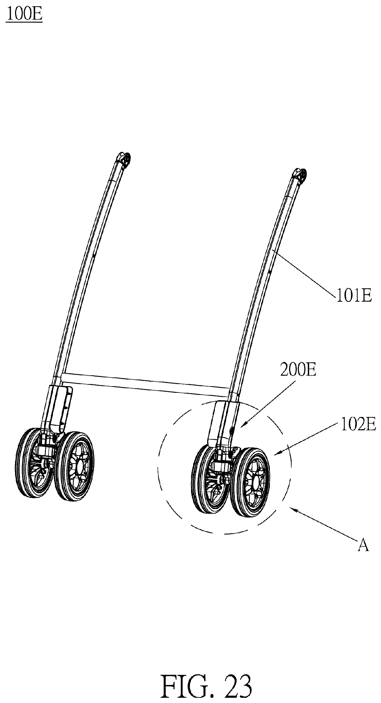

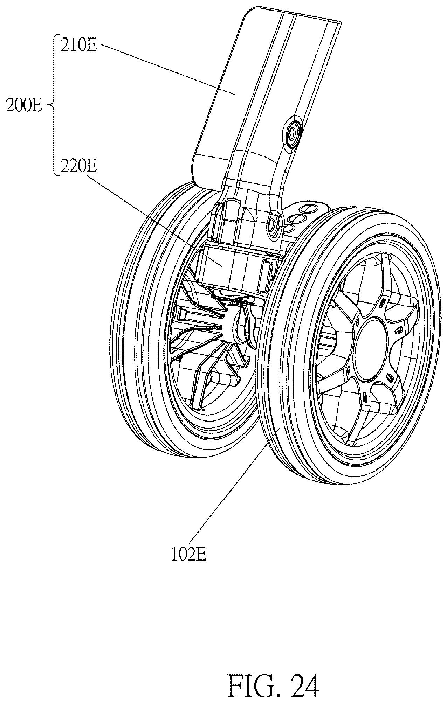

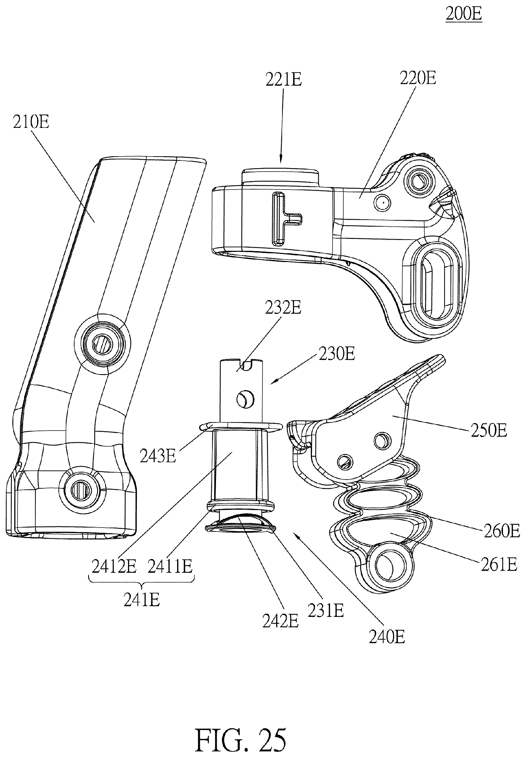

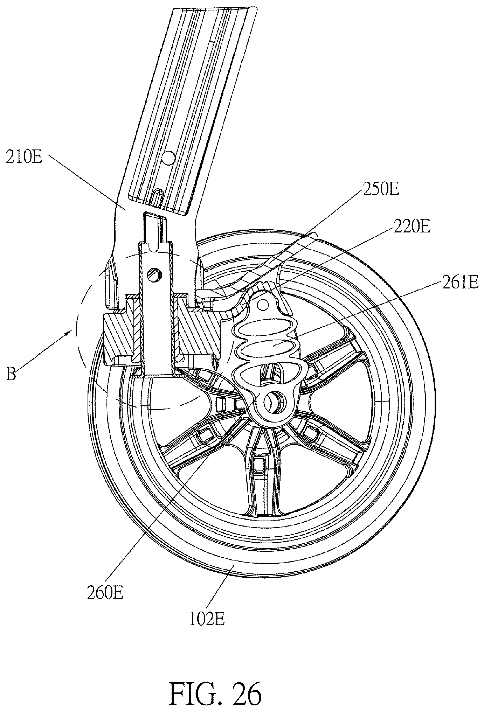

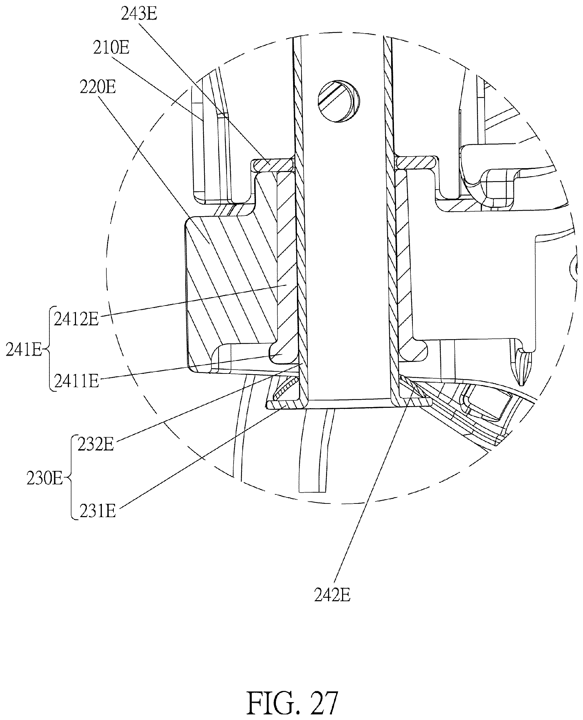

Please refer to FIG. 23 to FIG. 27. FIG. 23 is a partial diagram of a child carrier 100E according to a fifth embodiment of the present invention. FIG. 24 is an enlarged diagram of an A portion of the child carrier 100E shown in FIG. 23 according to the fifth embodiment of the present invention. FIG. 25 is an exploded diagram of an anti-shimmy device 200E according to the fifth embodiment of the present invention. FIG. 26 is partial sectional diagram of the child carrier 100E according to the fifth embodiment of the present invention. FIG. 27 is an enlarged diagram of a B portion of the child carrier 100E shown in FIG. 26 according to the fifth embodiment of the present invention. As shown in FIG. 23 to FIG. 27, the child carrier 100E includes a frame 101E, at least one wheel 102E and at least one anti-shimmy device 200E. The anti-shimmy device 200E is disposed between the frame 101E and the corresponding wheel 102E. The anti-shimmy device 200E includes a connecting base 210E, a wheel base 220E, a spindle component 230E and a restraining mechanism 240E. The connecting base 210E is connected to the frame 101E. The wheel base 220E is connected to the corresponding wheel 102E. A lower end portion of the spindle component 230E is rotatably connected to the wheel base 220E. An upper end portion of the spindle component 230E is fixedly connected to the connecting base 210E. The restraining mechanism 240E is for restraining a shimmy movement of the wheel base 220E relative to the connecting base 210E.

Specifically, as shown in FIG. 25 and FIG .27, the restraining mechanism 240E includes a rotating sleeve 241E and a damping plate 242E. The rotating sleeve 241E is fixedly disposed on the wheel base 220E. The spindle component 230E passes through the rotating sleeve 241E and is rotatable relative to the rotating sleeve 241E for achieving a rotatable connection of the spindle component 230E and the wheel base 220E. The damping plate 242E is disposed on the spindle component 230E and can push the rotating sleeve 241E along an axial direction of the spindle component 230E for restraining a vibration of the spindle component 230E along the vertical direction to restrain a shimmy movement of the wheel base 220 relative to the connecting base 210E along the vertical direction.

In this embodiment, the spindle component 230E includes a restraining portion 231E and an extending portion 232E. The rotating sleeve 241E includes a penetrating hole for insertion of the extending portion 232E. The restraining portion 231E is for restraining an insertion length of the extending portion 232E into the penetrating hole. The damping plate 242E is located between the restraining portion 231E and the rotating sleeve 241E. The extending portion 232E passes through the penetrating hole to be connected to the connecting base 210E. Besides, the rotating sleeve 241E further includes an abutting portion 2411E and a rotating portion 2412E. The wheel base 220E includes an installation hole 221E for allowing insertions of the extending portion 232E and the rotating portion 2412E. The rotating portion 2412E is located between the extending portion 232E and the wheel base 220E. The abutting portion 2411E and the restraining portion 231E are exposed out of the installation hole 221E. The damping plate 242E is located between the abutting portion 2411E and the restraining portion 231E. The abutting portion 2411E can abut against the wheel base 220E along the vertical direction, and the damping plate 242E can abut against the abutting portion 2411E along the vertical direction. Therefore, the shimmy movement of the wheel base 220E relative to the connecting base 210E along the vertical direction can be effectively restrained.

In this embodiment, the spindle component 230E can be a hollow pipe for reducing weight. Furthermore, the rotating sleeve 241E can be made of plastic material, so that the rotating sleeve 241E can be resiliently deformed, and the abutting portion 2411E and the rotating portion 2412E can be integrally formed with each other.

Moreover, as shown in FIG. 25 and FIG. 26, the restraining mechanism 240E further includes a blocking plate 243E. The blocking plate 243E is located above the rotating sleeve 241E. The spindle component 230E penetrates through the blocking plate 243E. The blocking plate 243E is located between the rotating sleeve 241E and the connecting base 210E and between the wheel base 220E and the connecting base 210E, so as to restrain a shimmy movement of the wheel base 220E relative to the connecting base 210E along the horizontal direction.

In addition, the anti-shimmy device 200E further includes a braking component 250E and a shock-absorbing portion 260E. The braking component 250E can be operated to abut against the wheel 102E to reduce a rotary speed of the wheel 102E. The shock-absorbing portion 260E is located beneath the braking component 250E and resilient for preventing the wheel 102E from driving the wheel base 220E to shimmy relative to the connecting base 210E along the vertical direction. In this embodiment, the shock-absorbing portion 260E can be made of plastic material, and at least one buffering portion 261E, which is an ellipse-shaped structure, can be disposed on the shock-absorbing portion 260E for improving a shock-absorbing effect of the shock-absorbing component 260E. However, the present invention is not limited to this embodiment. For example, in another embodiment, the buffering portion can be a circular structure or a quadrilateral structure.

In this embodiment, the anti-shimmy device 200E utilizes the damping plate 242E and the blocking plate 243E to restrain the shimmy movements of the wheel base 220E relative to the connecting base 210E along the vertical direction and the horizontal direction respectively. Besides, the anti-shimmy device 200E further utilizes the shock-absorbing portion 260E to prevent the wheel 102E from driving the wheel base 220E to shimmy relative to the connecting base 210E along the vertical direction. Therefore, the child carrier 100E is prevented from bouncing or shaking when going over a bumpy road, which improves riding safety and comfort of the child carrier 100E.

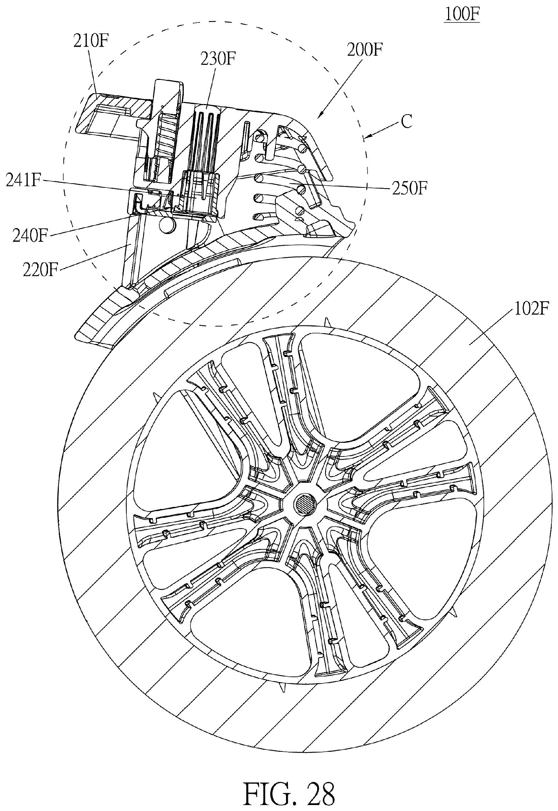

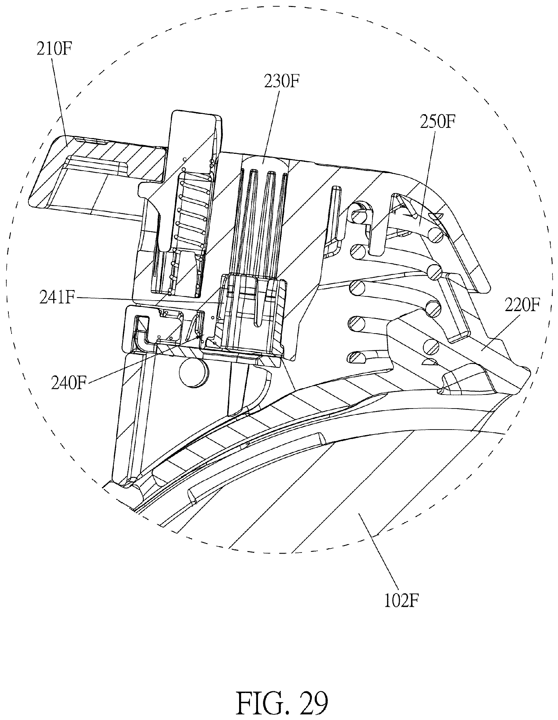

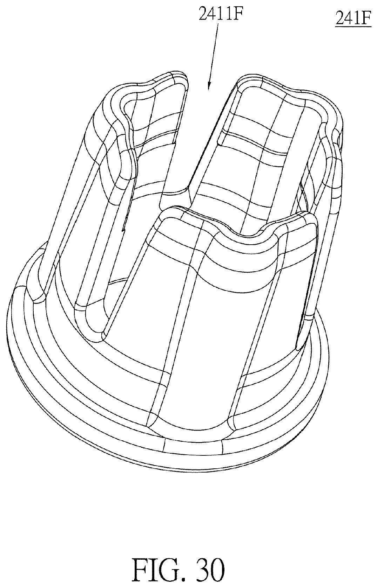

Please refer to FIG. 28 to FIG. 30. FIG. 28 is a partial diagram of a child carrier 100F according to a sixth embodiment of the present invention. FIG. 29 is an enlarged diagram of a C portion of the child carrier 100F according to the sixth embodiment of the present invention. FIG. 30 is a diagram of a sheathing component 241F according to the sixth embodiment of the present invention. As shown in FIG. 28 to FIG. 30, the child carrier 100F includes a frame, at least one wheel 102F and at least one anti-shimmy device 200F. The anti-shimmy device 200F is disposed between the frame and the corresponding wheel 102F. The anti-shimmy device 200F includes a connecting base 210F, a wheel base 220F, a spindle component 230F and a restraining mechanism 240F. The connecting base 210F is connected to the frame. The wheel base 220F is connected to the corresponding wheel 102F. A lower end portion of the spindle component 230F is fixedly connected to the wheel base 220F. An upper end portion of the spindle component 230F is rotatably connected to the connecting base 210F. The restraining mechanism 240F is for restraining a shimmy movement of the wheel base 220F relative to the connecting base 210F.

Specifically, as shown in FIG. 30, the restraining mechanism 240F includes the sheathing component 241F fixedly disposed on the connecting base 210F and sleeved on the spindle component 230F. At least one notch 2411F is disposed on a wall of the sheathing component 241F. An inner diameter of the sheathing component 241F is less than an outer diameter of the spindle component 230F. Therefore, when the sheathing component 241F is sleeved on the spindle component 230F, the sheathing component 241F can be resiliently expanded by the spindle component 230F to clamp the spindle component 230F to restrain a rotation of the spindle component 230F along the horizontal direction for restraining a shimmy movement of the wheel base 220F relative to the connecting base 210F along the horizontal direction.

Besides, as shown in FIG. 29, the anti-shimmy device 200F further includes a buffering component 250F disposed between the wheel base 220F and the connecting base 210F for preventing the wheel base 220F from driving the connecting base 210F to shimmy along the vertical direction.

In this embodiment, the anti-shimmy device 200F utilizes the sheathing component 241F to restrain the rotation of the spindle component 230F along the horizontal direction for restraining the shimmy movement of the wheel base 220F relative to the connecting base 210F along the horizontal direction. Besides, the anti-shimmy device 200F further utilizes the buffering component 250F to prevent the wheel base 220F from driving the connecting base 210F to shimmy along the vertical direction. Therefore, the child carrier 100F is prevented from bouncing or shaking when going over a bumpy road, which improves riding safety and comfort of the child carrier 100F.

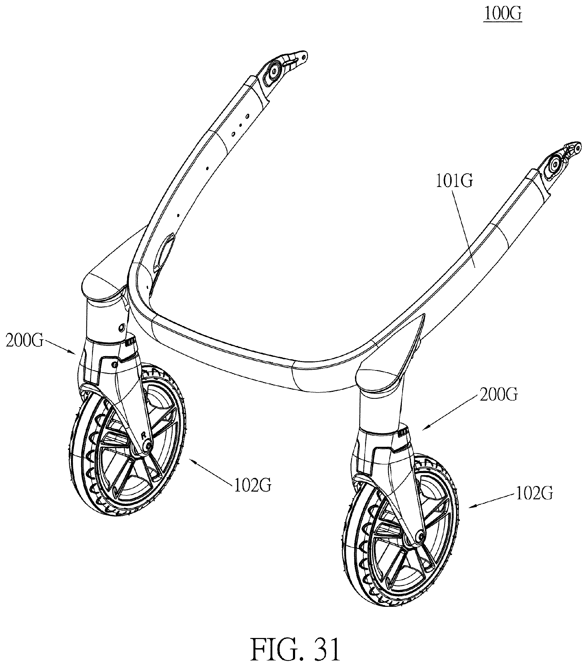

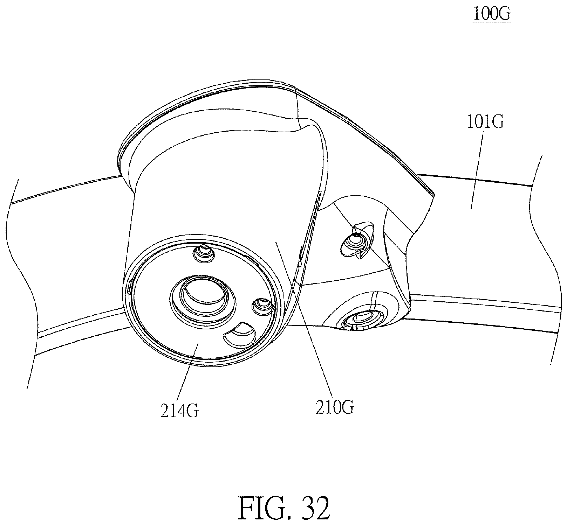

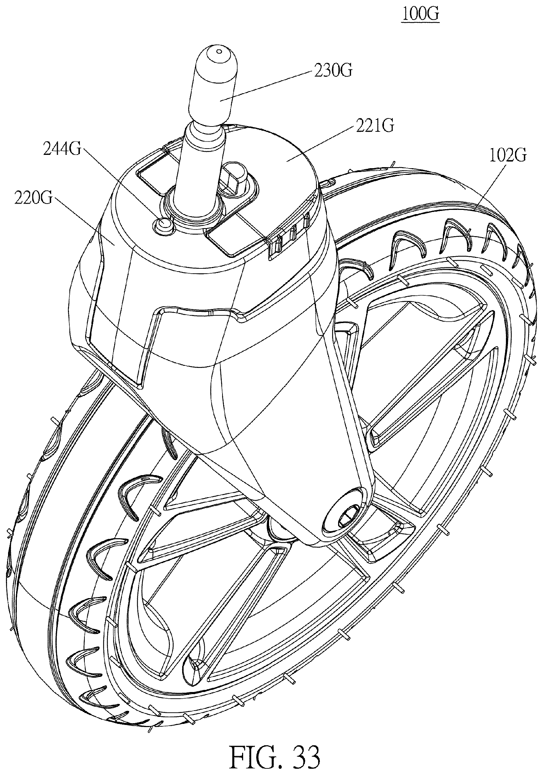

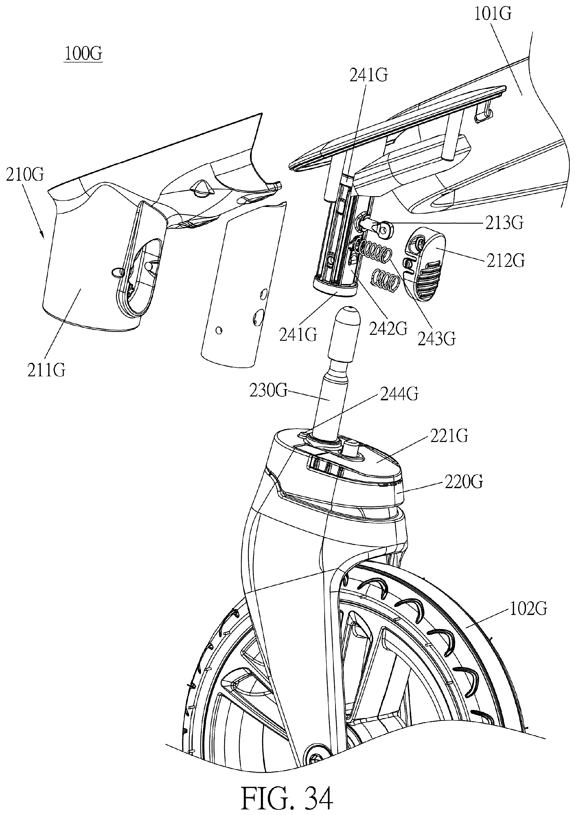

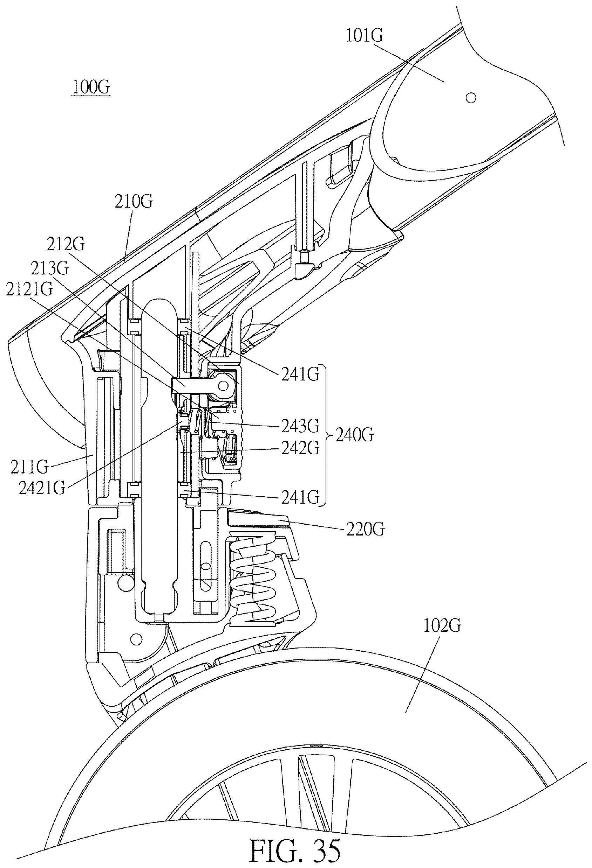

Please refer to FIG. 31 to FIG. 35. FIG. 31 is a partial diagram of a child carrier 100G according to a seventh embodiment of the present invention. FIG. 32 is a partial enlarged diagram of the child carrier 100G according to the seventh embodiment of the present invention. FIG. 33 is another partial enlarged diagram of the child carrier 100G according to the seventh embodiment of the present invention. FIG. 34 is a partial exploded diagram of the child carrier 100G according to the seventh embodiment of the present invention. FIG. 35 is a partial sectional diagram of the child carrier 100G according to the seventh embodiment of the present invention. As shown in FIG. 31 to FIG. 35, the child carrier 100G includes a frame 101G, at least one wheel 102G and at least one anti-shimmy device 200G. The anti-shimmy device 200G is disposed between the frame 101G and the corresponding wheel 102G. The anti-shimmy device 200G includes a connecting base 210G, a wheel base 220G, a spindle component 230G and a restraining mechanism 240G. The connecting base 210G is connected to the frame 101G. The wheel base 220G is connected to the corresponding wheel 102G. A lower end portion of the spindle component 230G is fixedly connected to the wheel base 220G. An upper end portion of the spindle component 230G is rotatably connected to the connecting base 210G. The restraining mechanism 240G is for restraining a shimmy movement of the wheel base 220G relative to the connecting base 210G.

Specifically, the restraining mechanism 240G includes two bearings 241G. The two bearings 241G are fixedly disposed on the connecting base 210G. The spindle component 230G passes through the two bearings 241G for achieving a rotatable connection of the spindle component 230G and the connecting base 210G. The restraining mechanism 240G further includes a shaft sleeve 242G and a resilient component 243G. The shaft sleeve 242G is movably disposed on the connecting base 210G and sleeved on the spindle component 230G. The resilient component 243G is disposed between the connecting base 210G and the shaft sleeve 242G for driving the shaft sleeve 242G to push the spindle component 230G along a lateral direction of the spindle component 230G, so as to restrain a rotation of the spindle component 230G along the horizontal direction for restraining a shimmy movement of the wheel base 220G relative to the connecting base 210 along the horizontal direction. However, the present invention is not limited to this embodiment. In another embodiment, the restraining mechanism can include only one bearing.

More specifically, as shown in FIG. 34 and FIG. 35, the connecting base 210G includes a base body 211G, an operator 212G and a positioning component 213G. The shaft sleeve 242G, the two bearings 241G and the spindle component 230G are disposed inside the base body 211G. The shaft sleeve 242G is located between the two bearings 241G. The operator 212G and the positioning component 213G are movably disposed on the base body 211G and linked to each other. The positioning component 213G passes through the base body 211G to engage with the spindle component 230G. The operator 212G can drive the positioning component 213G to disengage from the spindle component 230G. A positioning column 2421G protrudes from the shaft sleeve 242G. An end of the resilient component 243G is sleeved on the positioning column 2421G. Another positioning column 2121G protrudes from the operator 212G. Another end of the resilient component 243G is sleeved on the positioning column 2121G.

Besides, as shown in FIG. 32 to FIG. 34, the restraining mechanism 240G further includes an abutting component 244G disposed between the connecting base 210G and the wheel base 220G. Specifically, the abutting component 244G is disposed on the wheel base 220G and protrudes out of a surface 221G of the wheel base 220G. The abutting component 244G is for abutting against a surface 214G of the connecting base 210G adjacent to the wheel base 220G for preventing a direct contact of the surface 214G and the surface 221G, which not only can reduce a frictional area of the surface 214G and the surface 221G but also reduce a noise caused by a movement of the wheel base 220G relative to the connecting base 210G.

In this embodiment, the anti-shimmy device 200G utilizes the shaft sleeve 242G to restrain the rotation of the spindle component 230G along the horizontal direction for restraining the shimmy movement of the wheel base 220G relative to the connecting base 210G along the horizontal direction. Therefore, the child carrier 100G is prevented from bouncing or shaking when going over a bumpy road, which improves riding safety and comfort of the child carrier 100G. Besides, the anti-shimmy device 200G further utilizes the abutting component 244G to prevent the direct contact of the surface 214G and the surface 221G, which not only can reduce the frictional area of the surface 214G and the surface 221G but also reduce the noise caused by a movement of the wheel base 220G relative to the connecting base 210G.

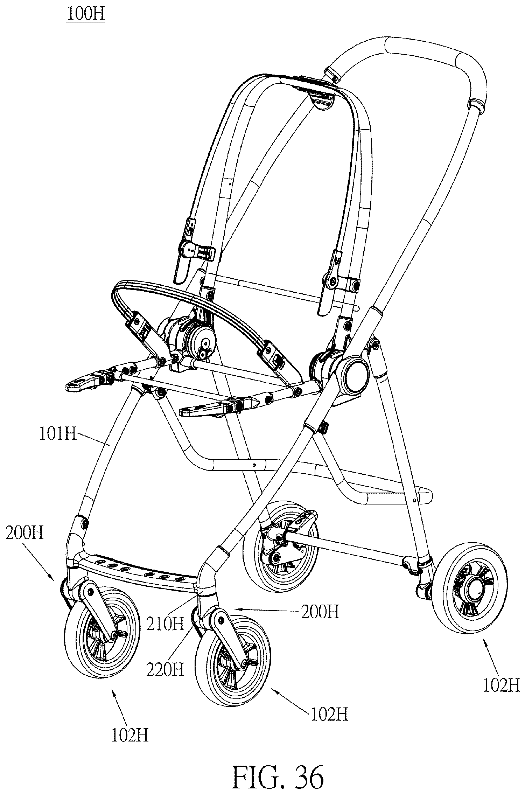

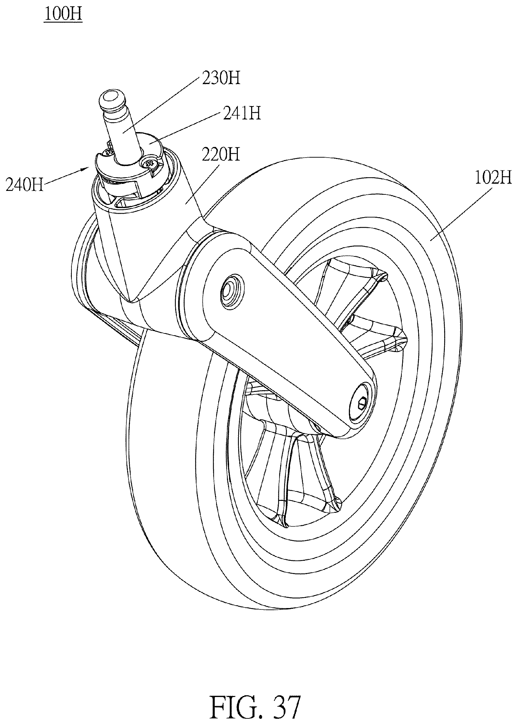

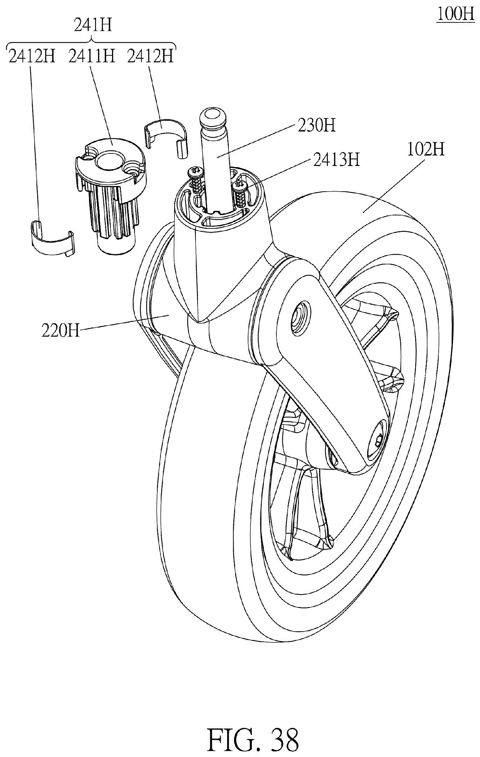

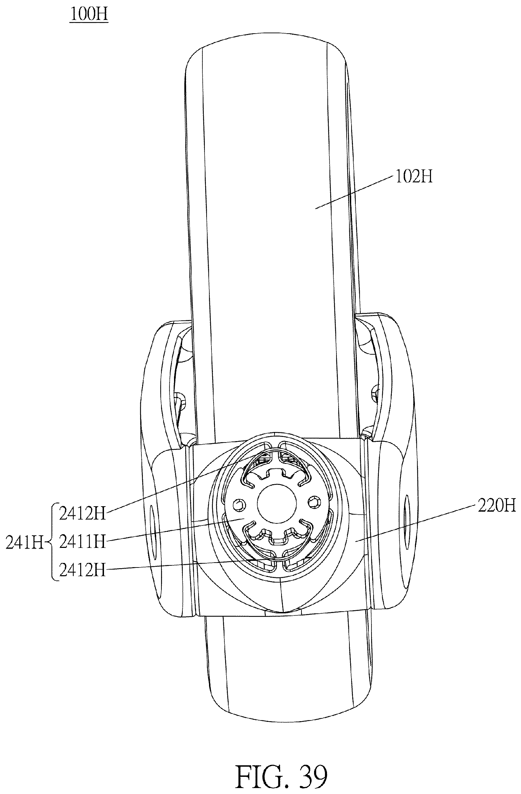

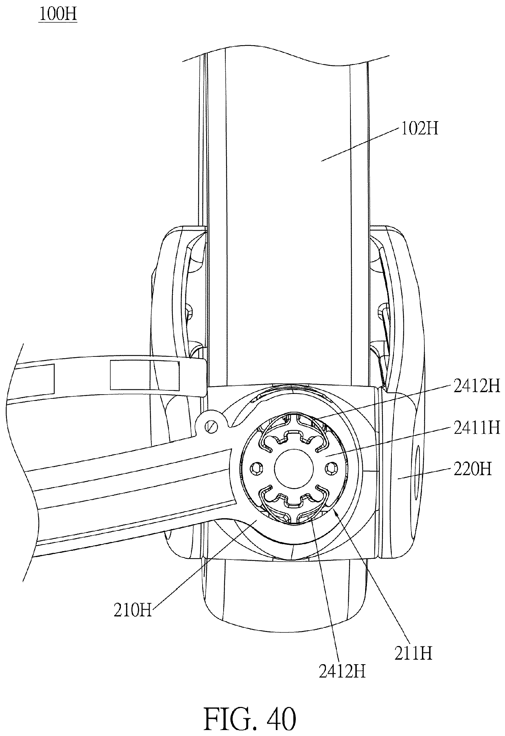

Please refer to FIG. 36 to FIG. 40. FIG. 36 is a schematic diagram of a child carrier 100H according to an eighth embodiment of the present invention. FIG. 37 is a partial diagram of the child carrier 100H according to the eighth embodiment of the present invention. FIG. 38 is a partial exploded diagram of the child carrier 100H according to the eighth embodiment of the present invention. FIG. 39 is a partial internal structural diagram of the child carrier 100H according to the eighth embodiment of the present invention. FIG. 40 is another partial internal structural diagram of the child carrier 100H according to the eighth embodiment of the present invention. As shown in FIG. 36 to FIG. 40, the child carrier 100H includes a frame 101H, at least one wheel 102H and at least one anti-shimmy device 200H. The anti-shimmy device 200H is disposed between the frame 101H and the corresponding wheel 102H. The anti-shimmy device 200H includes a connecting base 210H, a wheel base 220H, a spindle component 230H and a restraining mechanism 240H. The connecting base 210H is connected to the frame 101H. The wheel base 220H is connected to the corresponding wheel 102H. A lower end portion of the spindle component 230H is fixedly connected to the wheel base 220H. An upper end portion of the spindle component 230H is rotatably connected to the connecting base 210H. The restraining mechanism 240H is for restraining a shimmy movement of the wheel base 220H relative to the connecting base 210H.

Specifically, the restraining mechanism 240H includes a fixing base 241H fixedly connected to the wheel base 220H and sleeved on the spindle component 230H for achieving a fixed connection of the spindle component 230H and the wheel base 220H. An accommodating hole 211H is disposed on the connecting base 210H. The fixing base 241H is at least partially disposed inside the accommodating hole 211H and rotatable relative to the accommodating hole 211H for achieving a rotatable connection of the spindle component 230H and the connecting base 210H. The fixing base 241H tightly fits with the accommodating hole 211H to restrain a rotation of the spindle component 230H along the horizontal direction by a frictional force between the fixing base 241H and a wall of the accommodating hole 211H for restraining a shimmy movement of the wheel base 220H relative to the connecting base 210H along the horizontal direction.

More specifically, as shown in FIG. 38 to FIG. 40, the fixing base 241H includes a fixing main body 2411H and two resilient abutting portions 2412H disposed on the fixing main body 2411H. Preferably, in this embodiment, the fixing main body 2411H can be fixedly connected to the wheel base 220H by two fastening components 2413H, wherein the fastening component 2413H can be a screw, and the two resilient abutting portions 2412H can be two resilient arms installed on the fixing main body 2411H and opposite to each other. When the fixing base 241H fits with the accommodating hole 211H, the two resilient abutting portions 2412H abut against the wall of the accommodating hole 211H and are resiliently deformed by the wall of the accommodating hole 211H. A frictional force between each of the two resilient abutting portions and the wall of the accommodating hole 211H can effectively restrain the rotation of the spindle component 230H along the horizontal direction for restraining the shimmy movement of the wheel base 220H relative to the connecting base 210H along the horizontal direction. However, the present invention is not limited to this embodiment. In another embodiment, the fixing base can include only one resilient abutting portion which can be a rubber protrusion.

In this embodiment, the anti-shimmy device 200H utilizes the frictional force between each of the two resilient abutting portions and the wall of the accommodating hole 211H to restrain the rotation of the spindle component 230H along the horizontal direction for restraining the shimmy movement of the wheel base 220H relative to the connecting base 210H along the horizontal direction. Therefore, the child carrier 100H is prevented from bouncing or shaking when going over a bumpy road, which improves riding safety and comfort of the child carrier 100H.

Moreover, in another embodiment, the child carrier also can include different anti-shimmy devices of the aforementioned different embodiments. For example, the different anti-shimmy devices of the aforementioned different embodiments can be disposed between the frame and the different wheels.

In contrast to the prior art, the restraining mechanism of the anti-shimmy device of the present invention can restrain the shimmy movement of the wheel base connected to the wheel relative to the connecting base connected to the frame. Therefore, the present invention can effectively prevent the child carrier from bouncing and shaking when the child carrier goes over a bumpy road, which improves riding safety and comfort of the child carrier.

Those skilled in the art will readily observe that numerous modifications and alterations of the device and method may be made while retaining the teachings of the invention. Accordingly, the above disclosure should be construed as limited only by the metes and bounds of the appended claims.

The disclosure also relates to the following examples:
1. An anti-shimmy device (200A, 200B, 200C, 200D, 200E, 200F, 200G, 200H) adapted for a wheel (102A, 102B, 102C, 102D, 102E, 102F, 102G, 102H) of a child carrier (100A, 100B, 100C, 100D, 100E, 100F, 100G, 100H), characterized in that the anti-shimmy device (200A, 200B, 200C, 200D, 200E, 200F, 200G, 200H) comprises:
   a connecting base (210A, 210B, 210C, 210D, 210E, 210F, 210G, 210H) connected to a frame (101A, 101B, 101C, 101D, 101E, 101G, 101H) of the child carrier (100A, 100B, 100C, 100D, 100E, 100F, 100G, 100H);
   a wheel base (220A, 220B, 220C, 220D, 220E, 220F, 220G, 220H) connected to the wheel (102A, 102B, 102C, 102D, 102E, 102F, 102G, 102H) of the child carrier (100A, 100B, 100C, 100D, 100E, 100F, 100G, 100H);
   a spindle component (230A, 230B, 230C, 230D, 230E, 230F, 230G, 230H) fixedly connected to one of the connecting base (210A, 210B, 210C, 210D, 210E, 210F, 210G, 210H) and the wheel base (220A, 220B, 220C, 220D, 220E, 220F, 220G, 220H) and rotatably connected to another one of the connecting base (210A, 210B, 210C, 210D, 210E, 210F, 210G, 210H) and the wheel base (220A, 220B, 220C, 220D, 220E, 220F, 220G, 220H); and
   a restraining mechanism (240A, 240B, 240C, 240D, 240E, 240F, 240G, 240H) configured to restrain a shimmy movement of the wheel base (220A, 220B, 220C, 220D, 220E, 220F, 220G, 220H) relative to the connecting base (210A, 210B, 210C, 210D, 210E, 210F, 210G, 210H).
2. The anti-shimmy device (200A) of Example 1, characterized in that the restraining mechanism (240A) comprises a damping component (241A) fixedly connected to the another one of the connecting base (210A) and the wheel base (220A), a through hole (2411A) is disposed on the damping component (241A), and the spindle component (230A) passes through the through hole (2411A) and tightly fits with the damping component (241A).
3. The anti-shimmy device (200A) of Example 2, characterized in that a recess (231A) is disposed on the spindle component (230A), and a protrusion (2412A) protrudes from the damping component (241A) and tightly fits with the recess (231A).
4. The anti-shimmy device (200A) of Example 3, characterized in that the recess (231A) is a trapezoid recess, and the protrusion (2412A) is a trapezoid protrusion.
5. The anti-shimmy device (200A) of Example 2, characterized in that the restraining mechanism (240A) further comprises at least one fixing component (243A) configured to fixedly connect the damping component (241A) to the another one of the connecting base (210A) and the wheel base (220A).
6. The anti-shimmy device (200A) of Example 2, characterized in that the restraining mechanism (240A) further comprises a bearing (242A) disposed on the another one of the connecting base (210A) and the wheel base (220A), and the spindle component (230A) is rotatably connected to the another one of the connecting base (210A) and the wheel base (220A) by the bearing (242A).
7. The anti-shimmy device (200B, 200C) of Example 1, characterized in that the restraining mechanism (240B 240C) comprises a pushing component (242B) configured to push the spindle component (230B, 230C) along an axial direction of the spindle component (230B, 230C).
8. The anti-shimmy device (200B) of Example 7, characterized in that the pushing component (242B) is movably disposed on the another one of the connecting base (210B) and the wheel base (220B), and the restraining mechanism (240B) further comprises a resilient component (241B) connected to the pushing component (242B) for driving the pushing component (242B) to push the spindle component (230B).
9. The anti-shimmy device (200B) of Example 8, characterized in that the restraining mechanism (240B) further comprises an engaging component (244B), a long hole (2441B) is disposed on the engaging component (244B), the spindle component (230B) passes through the long hole (2441B), and the engaging component (244B) is movable relative to the spindle component (230B) along a lateral direction of the spindle component (230B) by a cooperation of the long hole (2441B) and the spindle component (230B) to push the spindle component (230B) along the lateral direction of the spindle component (230B).
10. The anti-shimmy device (200B) of Example 9, characterized in that a recess (231B) is disposed on the spindle component (230B), and a protrusion (2442B) protrudes from the engaging component (244B) and engages with the recess (231B) along the lateral direction of the spindle component (230B) when the engaging component (244B) pushes the spindle component (230B) along the lateral direction of the spindle component (230B).
11. The anti-shimmy device (200B) of Example 9, characterized in that the engaging component (244B) is movably disposed on the another one of the connecting base (210B) and the wheel base (220B), and the restraining mechanism (240B) further comprises a recovering component (245B) disposed between the engaging component (244B) and the another one of the connecting base (210B) and the wheel base (220B) for driving the engaging component (244B) to push the spindle component (230B) along the lateral direction of the spindle component (230B).
12. The anti-shimmy device (200B) of Example 8, characterized in that the restraining mechanism (240B) further comprises at least one positioning column (243B) fixedly disposed on at least one of the pushing component (242B) and the another one of the connecting base (210B) and the wheel base (220B), and the resilient component (245B) is sleeved on the at least one positioning column (243B).
13. The anti-shimmy device (200C) of Example 7, characterized in that the pushing component (241C) comprises two protruding portions (2411C) fixedly disposed on the one of the connecting base (210C) and the wheel base (220C), and an end of the spindle component (230C) is clamped by the two protruding portions (2411C).
14. The anti-shimmy device (200C) of any one of Examples 1 and 13, characterized in that the restraining mechanism (240C) further comprises at least two rotators rotatably engaged with each other.
15. The anti-shimmy device (200C) of Example 14, characterized in that the at least two rotators comprises a first gear (2431C) and a second gear (2432C), the first gear (2431C) is fixedly disposed on the another one of the connecting base (210C) and the wheel base (220C) and sleeved on the spindle component (230C), and the second gear (2432C) is rotatably disposed on the one of the connecting base (210C) and the wheel base (220C).
16. The anti-shimmy device (200C) of Example 15, characterized in that the restraining mechanism (240C) further comprises a fixing portion (244C) fixedly disposed on the another one of the connecting base (210C) and the wheel base (220C) and sleeved on the spindle component (230C).
17. The anti-shimmy device (200C) of Example 16, characterized in that the first gear (2431C) and the fixing portion (244C) are integrally formed with each other.
18. The anti-shimmy device (200C) of Example 15, characterized in that a root diameter of the first gear (2431C) is larger than a root diameter of the second gear (2432C).
19. The anti-shimmy device (200D) of Example 1, characterized in that the restraining mechanism (240D) comprises a damping block (244D) disposed on a side of the spindle component (230D) and movable relative to the spindle component (230D) along a lateral direction of the spindle component (230D) to push the spindle component (230D) along the lateral direction of the spindle component (230D).
20. The anti-shimmy device (200D) of Example 19, characterized in that a recess (231D) is disposed on the spindle component (230D), and a protrusion (2441D) protrudes from the damping block (244D) and engages with the recess (231D) along the lateral direction of the spindle component (230D) when the damping block (244D) pushes the spindle component (230D) along the lateral direction of the spindle component (230D).
21. The anti-shimmy device (200D) of Example 19, characterized in that the damping block (244D) is movably disposed on the another one of the connecting base (210D) and the wheel base (220D), and the restraining mechanism (240D) further comprises a recovering component (245D) disposed between the damping block (244D) and the another one of the connecting base (210D) and the wheel base (220D) for driving the damping block (244D) to push the spindle component (230D) along the lateral direction of the spindle component (230D).
22. The anti-shimmy device (200D) of Example 21, characterized in that the restraining mechanism (240D) further comprises at least one positioning column (246D) fixedly disposed on at least one of the damping block (244D) and the another one of the connecting base (210D) and the wheel base (220D), and the recovering component (245D) is sleeved on the at least one positioning column (246D).
23. The anti-shimmy device (200D) of Example 19, characterized in that the restraining mechanism (240D) further comprises a mounting component (242D) fixedly disposed on the another one of the connecting base (210D) and the wheel base (220D), and the spindle component (230D) is rotatably connected to the another one of the connecting base (210D) and the wheel base (220D) by the mounting component (242D).
24. The anti-shimmy device (200D) of Example 19, characterized in that the anti-shimmy device (200D) further comprises a buffering component (250D) disposed between the wheel (102D) and the wheel base (220D), and the buffering component (250D) and the spindle component (230D) are arranged in parallel.
25. The anti-shimmy device (200E) of Example 1, characterized in that the restraining mechanism (240E) comprises a rotating sleeve (241E) and a damping plate (242E), the rotating sleeve (241E) is fixedly disposed on the another one of the connecting base (210E) and the wheel base (220E), the spindle component (230E) passes through the rotating sleeve (241E) and is rotatable relative to the rotating sleeve (241E), and the damping plate (242E) is disposed on the spindle component (230E) and pushes the rotating sleeve (241E) along an axial direction of the spindle component (230E).
26. The anti-shimmy device (200E) of Example 1, characterized in that the restraining mechanism (240E) comprises a damping plate (242E), and the damping plate (242E) is disposed on the spindle component (230E) and pushes the rotating sleeve (241E) along an axial direction of the spindle component (230E).
27. The anti-shimmy device (200E) of Example 26, characterized in that the restraining mechanism (240E) further comprises a rotating sleeve (241E), the rotating sleeve (241E) is fixedly disposed on the another one of the connecting base (210E) and the wheel base (220E), the spindle component (230E) comprises a restraining portion (231E) and an extending portion (232E), the rotating sleeve (241E) comprises a penetrating hole for insertion of the extending portion (232E), the restraining portion (231E) is for restraining an insertion length of the extending portion (232E) into the penetrating hole, the damping plate (242E) is located between the restraining portion (231E) and the rotating sleeve (241E), and the extending portion (232E) passes through the penetrating hole to be connected to the connecting base (210E).
28. The anti-shimmy device (200F) of Example 1, characterized in that the restraining mechanism (240F) comprises a sheathing component (241F), and the sheathing component (241F) is fixedly disposed on the another one of the connecting base (210F) and the wheel base (220F) and sleeved on the spindle component (230F).
29. The anti-shimmy device (200F) of Example 28, characterized in that at least one notch (2411F) is disposed on a wall of the sheathing component (241F), and an inner diameter of the sheathing component (241F) is less than an outer diameter of the spindle component (230F).
30. The anti-shimmy device (200G) of Example 1, characterized in that the restraining mechanism (240G) comprises a shaft sleeve (242G) and a resilient component (243G), the shaft sleeve (242G) is movably disposed on the another one of the connecting base (210G) and the wheel base (220G) and sleeved on the spindle component (230G), and the resilient component (243G) is disposed between the shaft sleeve (242G) and the another one of the connecting base (210G) and the wheel base (220G) for driving the shaft sleeve (242G) to push the spindle component (230G) along a lateral direction of the spindle component (230G).
31. The anti-shimmy device (200G) of Example 30, characterized in that the restraining mechanism (240G) further comprises at least one bearing (241G) fixedly disposed on the another one of the connecting base (210G) and the wheel base (220G).
32. The anti-shimmy device (200G) of Example 30, characterized in that the restraining mechanism (240G) further comprises an abutting component (244G) disposed between the connecting base (210G) and the wheel base (220G).
33. The anti-shimmy device (200H) of Example 1, characterized in that the restraining mechanism (240H) comprises a fixing base (241H) fixedly connected to the one of the connecting base (210H) and the wheel base (220H) and sleeved on the spindle component (230H), an accommodating hole (211H) is disposed on the another one of the connecting base (210H) and the wheel base (220H), and the fixing base (241H) tightly fits with the accommodating hole (211H).
34. The anti-shimmy device (200H) of Example 33, characterized in that the fixing base (241H) comprises a fixing main body (2411H) and at least one resilient abutting portion (2412H), and the at least one resilient abutting portion (2412H) abuts against a wall of the accommodating hole (211H) and is resiliently deformed when the fixing base (241H) tightly fits with the accommodating hole (211H).

## Claims

1. An anti-shimmy device (200E) adapted for a wheel (102E) of a child carrier (100E), wherein the anti-shimmy device (200E) comprises:
a connecting base (210E) connectable to a frame (101E) of the child carrier (100E);
a wheel base (220E) connectable to the wheel (102E) of the child carrier (100E);
a spindle component (230E) fixedly connected to the connecting base (210E) and rotatably connectable to the wheel base (220E); and
a restraining mechanism (240E) configured to restrain a shimmy movement of the wheel base (220E) relative to the connecting base (210E),
**characterized in that** the restraining mechanism (240E) comprises a rotating sleeve (241E) and a damping plate (242E), the rotating sleeve (241E) is fixedly disposed on the wheel base (220E), the spindle component (230E) passes through the rotating sleeve (241E) and is rotatable relative to the rotating sleeve (241E), and the damping plate (242E) is disposed on the spindle component (230E) and pushes the rotating sleeve (241E) along an axial direction of the spindle component (230E).

2. The anti-shimmy device (200A) of claim 1, wherein the spindle component (230E) comprises a restraining portion (231E) and an extending portion (232E), the rotating sleeve (241E) comprises a penetrating hole for insertion of the extending portion (232E), the restraining portion (231E) is for restraining an insertion length of the extending portion (232E) into the penetrating hole, the damping plate (242E) is located between the restraining portion (231E) and the rotating sleeve (241E), and the extending portion (232E) passes through the penetrating hole to be connectable to the connecting base (210E).

3. The anti-shimmy device (200A) of claim 2, wherein the rotating sleeve (241E) further includes an abutting portion (2411E) and a rotating portion (2412E), wherein the wheel base (220E) includes an installation hole (221E) for allowing insertions of the extending portion (232E) and the rotating portion (2412E).

4. The anti-shimmy device (200A) of claim 3, wherein the rotating portion (2412E) is located between the extending portion (232E) and the wheel base (220E).

5. The anti-shimmy device (200A) of claim 3 or 4, wherein the abutting portion (2411E) and the restraining portion (231E) are exposed out of the installation hole (221E).

6. The anti-shimmy device (200A) of any one of claims 3 to 5, wherein the damping plate (242E) is located between the abutting portion (2411E) and the restraining portion (231E).

7. The anti-shimmy device (200A) of any one of claims 3 to 6, wherein the abutting portion (2411E) is configured to abut against the wheel base (220E) along the vertical direction; and/or wherein the damping plate (242E) is configured to abut against the abutting portion (2411E) along the vertical direction.

8. The anti-shimmy device (200A) of any one of claims 3 to 7, wherein the abutting portion (2411E) and the rotating portion (2412E) are integrally formed with each other.

9. The anti-shimmy device (200A) of any one of the preceding claims, wherein the spindle component (230E) is configured as a hollow pipe.

10. The anti-shimmy device (200A) of any one of the preceding claims, wherein the rotating sleeve (241E) is made of plastic material and is configured to be resiliently deformed.

11. The anti-shimmy device (200A) of any one of the preceding claims, wherein the restraining mechanism (240E) further includes a blocking plate (243E) located above the rotating sleeve (241E), wherein the spindle component (230E) penetrates through the blocking plate (243E), wherein the blocking plate (243E) is located between the rotating sleeve (241E) and the connecting base (210E) and between the wheel base (220E) and the connecting base (210E), so as to restrain a shimmy movement of the wheel base (220E) relative to the connecting base (210E) along the horizontal direction.

12. The anti-shimmy device (200A) of claim 11, wherein the damping plate (242E) and the blocking plate (243E) are configured to restrain the shimmy movements of the wheel base (220E) relative to the connecting base (210E) along the vertical direction and the horizontal direction respectively.

13. The anti-shimmy device (200A) of any one of the preceding claims, wherein the anti-shimmy device (200E) further includes a braking component (250E) and a shock-absorbing portion (260E), wherein the braking component (250E) is operable to abut against the wheel (102E) to reduce a rotary speed of the wheel (102E), wherein the shock-absorbing portion (260E) is located beneath the braking component (250E) and is resilient for preventing the wheel (102E) from driving the wheel base (220E) to shimmy relative to the connecting base (210E) along the vertical direction.

14. The anti-shimmy device (200A) of claim 13, wherein the shock-absorbing portion (260E) is made of plastic material, and/or
wherein at least one buffering portion (261E) is disposed on the shock-absorbing portion (260E) for improving a shock-absorbing effect of the shock-absorbing component (260E), wherein the buffering portion is optionally an ellipse-shaped structure, a circular structure or a quadrilateral structure.

15. The anti-shimmy device (200A) of claim 13 or 14, wherein the shock-absorbing portion (260E) is configured to prevent the wheel (102E) from driving the wheel base (220E) to shimmy relative to the connecting base (210E) along the vertical direction.
